# EUROPÄISCHE PATENTSCHRIFT

(11) **EP 2 981 787 B1**
(45) Veröffentlichungstag und Bekanntmachung des Hinweises auf die Patenterteilung: **18.07.2018**
(21) Anmeldenummer: 14714999.1
(22) Anmeldetag: 02.04.2014
(51) Int. Cl.: G01C 15/00, G01C 25/00

(54) **VERMESSUNGSGERÄT MIT FUNKTION ZUR KALIBRIERUNG EINER ANZEIGE-BILDPOSITION EINES ELEKTRONISCHEN FADENKREUZES**
MEASURING DEVICE WITH FUNCTION FOR CALIBRATING A DISPLAY IMAGE POSITION OF AN ELECTRONIC RETICULE
APPAREIL DE MESURE DOTÉ D'UNE FONCTION DE CALIBRAGE D'UNE POSITION D'IMAGE D'INDICATION D'UN RÉTICULE À CROISILLON ÉLECTRONIQUE

(30) Priorität: 05.04.2013 EP 13162640
(43) Veröffentlichungstag der Anmeldung: 10.02.2016
(73) Patentinhaber: Leica Geosystems AG, 9435 Heerbrugg (CH)
(72) Erfinder: KOTZUR, Norbert, CH-9450 Altstätten (CH); ZOGG, Hans-Martin, CH-8592 Uttwil (CH); GÄCHTER TOYA, Stefan Martin Benjamin, CH-9000 St. Gallen (CH)
(74) Vertreter: Kaminski Harmann
(86) Internationale Anmeldenummer: PCT/EP2014/056591
(87) Internationale Veröffentlichungsnummer: WO 2014/161882

(56) Entgegenhaltungen:
- US-B2- 7 982 866

## Beschreibung

Die Erfindung betrifft ein Vermessungsgerät mit in der Anzieleinheit integrierter koaxialer Kamera, insbesondere Video-Theodolit oder Video-Tachymeter, nach Anspruch 1, ein Verfahren für ein solches Vermessungsgerät nach Anspruch 14 sowie ein Computerprogrammprodukt nach Anspruch 15. Zum Vermessen eines Zielpunktes sind seit der Antike eine Vielzahl von geodätischen Verfahren bzw. geodätischen Geräten bekannt. Als räumliche Standarddaten werden dabei Entfernung und Winkel von einem Messgerät zum zu vermessenden Zielpunkt aufgenommen sowie insbesondere der Ort des Messgerätes nebst evtl. vorhandenen Bezugspunkten erfasst.
Ein allgemein bekanntes Beispiel für solche Vermessungsgeräte bzw. geodätische Geräte stellt ein Theodolit, ein Tachymeter oder eine Totalstation dar, die auch als elektronischer Tachymeter oder Computer-Tachymeter bezeichnet wird. Eine solche geodätische Messvorrichtung des Stands der Technik ist beispielsweise in der Veröffentlichungsschrift EP 1 686 350 beschrieben. Derartige Geräte verfügen über elektrosensorische Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Moderne Totalstationen verfügen über Mikroprozessoren zur digitalen Weiterverarbeitung und Speicherung erfasster Messdaten. Die Geräte sind in der Regel in kompakter und integrierter Bauweise hergestellt, wobei meist koaxiale Distanz- und Winkelmesselemente sowie Rechen-, Steuer- und Speichereinheiten in einem Gerät integriert sind. Abhängig von der Ausbaustufe der Totalstation sind Mittel zur Motorisierung der Zieloptik, zur reflektorlosen Streckenmessung, zur automatischen Zielsuche und -verfolgung und zur Fernsteuerung des gesamten Geräts integriert. Aus dem Stand der Technik bekannte Totalstationen verfügen weiters über eine Funkdatenschnittstelle zum Aufbau einer Funkverbindung zu externen Peripheriekomponenten wie z.B. zu einem Datenerfassungsgerät, welches insbesondere als handhaltbarer Datenlogger, Feldrechner, Notebook, Kleincomputer oder PDA ausgebildet sein kann. Mittels der Datenschnittstelle ist es möglich, von der Totalstation erfasste und gespeicherte Messdaten zur externen Weiterverarbeitung auszugeben, extern erfasste Messdaten zur Speicherung und/oder Weiterverarbeitung in die Totalstation einzulesen, Fernsteuersignale zur Fernsteuerung der Totalstation oder einer weiteren externen Komponente insbesondere im mobilen Feldeinsatz ein- bzw. auszugeben und Steuerungs-Software in die Totalstation zu überspielen.

Je nach Ausführung des zu vermessenden Zielpunkts variiert die beim Vermessungsvorgang erzielbare Messgenauigkeit. Wird der Zielpunkt beispielsweise durch einen speziell zur Vermessung ausgebildeten Zielreflektor - wie ein Rundumprisma - dargestellt, so können wesentlich genauere Messergebnisse erreicht werden als bei einer reflektorlosen Messung beispielsweise zu einem zu vermessenden Punkt einer Hauswand. Dies liegt unter anderem daran, dass der ausgesendete optische Messstrahl einen nicht punktförmigen sondern flächigen Strahlquerschnitt aufweist und somit nicht nur am eigentlich zu vermessenden Zielpunkt gestreute Messstrahlung empfangen wird, sondern auch von Punkten in der unmittelbaren Sichtfeldumgebung des Zielpunktes, die ebenso mit der Messstrahlung beaufschlagt werden. Beispielsweise beeinflusst in bekannter Weise die Rauhigkeit der Oberfläche des zu vermessenden Punktes die Genauigkeiten von reflektorlosen Messungen.

Zum Anvisieren bzw. Anzielen eines zu vermessenden Zielpunkts weisen gattungsgemässe Vermessungsgeräte eine Anzieleinrichtung (wie ein Teleskop) auf. In einer einfachen Ausführungsvariante ist die Visiereinrichtung beispielsweise als Zielfernrohr ausgebildet. Moderne Geräte können ausserdem eine in das Zielfernrohr integrierte Kamera zur Erfassung eines Bildes aufweisen, wobei das erfasste Bild insbesondere als Live-Bild auf einem Display der Totalstation und/oder einem Display des zur Fernsteuerung verwendeten Peripheriegeräts - wie eines Datenloggers - angezeigt werden kann. Die Optik der Visiereinrichtung kann dabei einen manuellen Fokus - beispielsweise eine Stellschraube zur Veränderung der Fokusposition der Optik - aufweisen oder über einen Autofokus verfügen, wobei das Verändern der Fokusposition z.B. durch Servomotoren erfolgt. Automatische Fokussiereinrichtungen für Zielfernrohre geodätischer Geräte sind z.B. aus der DE 19710722, der DE 19926706 oder der DE 19949580 bekannt.

Das optische System bzw. der optische Sichtkanal der Anzieleinrichtung enthält insbesondere eine Objektivlinsengruppe, eine Fokussierlinsengruppe und ein Okular, die in dieser Reihenfolge von der Objektseite her angeordnet sind. Die Position der Fokussierlinsengruppe wird abhängig von der Objektentfernung so eingestellt, dass ein scharfes Objektbild auf einem in der Scharfstellebene angeordneten optischen Element mit Anzielmarkierung entsteht (insbesondere Retikel oder Strichplatte, oder Platte mit Fadenkreuzmarkierung und Strichmarkierungen). Dieses optische Element mit dem in dieser Ebene erzeugten Bild kann dann durch das Okular betrachtet werden.

Die zusätzlich zum Direktsichtkanal vorgesehene koaxiale Kamera (z.B. mit CCD- oder CMOS-Flächensensor) kann in einer weiteren in der Teleskopoptik vorgesehenen Bildebene angeordnet sein, wofür eine Auskopplung eines Teillichtstrahls über einen Strahlteiler vorgesehen sein kann, sodass mit der Kamera ein Bild (bzw. eine Bildserie oder ein Video-Stream) durch das Objektiv hindurch aufnehmbar ist.

Des Weiteren kann für die koaxiale elektronische Distanzmessung ein zusätzlicher separater Sende- und Empfangskanalzweig vorgesehen sein. Zudem weisen gängige Vermessungsgeräte inzwischen eine automatische Zielverfolgungs-Funktion (ATR: "Automatic Target Recognition") auf, für die eine weitere separate ATR-Lichtquelle - z.B. ein Multimodefaserausgang, der Licht mit einer weiteren definierten Wellenlänge emittiert - sowie ein spezieller ATR-Kamerasensor zusätzlich im Teleskop integriert sind.

Um Verzeichnungen, Farbstiche oder eine Vignettierung - d.h. einen Helligkeitsabfall in Randbereichen des beobachtbaren Sichtfelds - zu vermeiden, sind enorm hohe Anforderungen an die einzelnen optischen Komponenten gegeben. Demnach sind im Allgemeinen speziell und aufwändig beschichtete Optiken zur Aus- und Einkopplung einzelner Wellenlängen erforderlich, wobei trotz Beschichtung das visuelle Band eine möglichst farbgetreue Darstellung erlauben soll. Zudem bedingt die hohe Komplexität des Teleskops einen hohen Aufwand für die erforderliche hochpräzise Montage und Justage der optischen Komponenten.

Beispielhaft ist der Aufbau gattungsgemässer Zielfernrohre von geodätischen Geräten in den Veröffentlichungsschriften EP 1 081 459 oder EP 1 662 278 gezeigt.

Bei einer typischen Ein-Mann-Vermessungsaufgabe mit Zielreflektor wird beispielsweise im Gelände eine Totalstation aufgestellt. Der Benutzer bewegt eine handgehaltene Vermessungsstange, die den Zielreflektor trägt, an einen zu vermessenden Zielpunkt, wobei daraufhin die Position des Zielreflektors und somit des Zielpunkts wie folgt bestimmt werden kann. Die Steuerung der Totalstation erfolgt insbesondere ferngesteuert durch den die Vermessungsstange tragenden Benutzer mittels eines in Funkverbindung zur Totalstation stehenden Datenloggers. Der Datenlogger kann dabei an der mit dem Zielreflektor ausgestatteten Vermessungsstange angebracht oder neben der Vermessungsstange zusätzlich durch den Benutzer handgehalten werden.

Das Anvisieren eines Ziels kann dabei im Allgemeinen entweder unter Verwendung des im Teleskop/Zielfernrohr vorgesehenen physischen Fadenkreuzes oder mittels eines dem Benutzer im Display der Basisstation (oder des Datenloggers) angezeigten Live-Bildes und diesem überlagertem elektronischem Fadenkreuz erfolgen, das von der koaxial im Zielfernrohr angeordneten Kamera als Visiereinrichtung der Totalstation bereitgestellt wird. Demnach kann der Benutzer die Totalstation anhand des Live-Bildes entsprechend auf das gewünschte, im Live-Bild erkennbare Ziel ausrichten, wozu im angezeigten Live-Bild der koaxialen Kamera ein künstliches (also elektronisches) Fadenkreuz überlagert angezeigt werden kann. Die Bildposition, an welcher das elektronische Fadenkreuz angezeigt werden soll, soll dabei möglichst so gewählt sein, dass die dadurch indizierte Raumrichtung möglichst genau mit der jener Richtung korrespondiert, welche durch das im Teleskop integrierte physische optische Element mit Anzielmarkierung (also etwa dem Retikel) indiziert wird. Dies unabhängig davon, ob die durch das Retikel indizierte Richtung (Anzielrichtung) selbst nochmals einen Fehler gegenüber der eigentlichen Messrichtung (also der Richtung, in welche letztendlich die Messstrahlung ausgesendet wird und somit die Messrichtung darstellt) aufweist. Dieser Richtungsfehler zwischen Anzielrichtung und Messrichtung wird dabei unabhängig vom Problem der Positionierung des elektronischen Fadenkreuzes im Bild behandelt und ist separat zu betrachten.

Da ein physisches Re-Kalibrieren (Re-Justieren) der durch das physische optische Element mit Anzielmarkierung indizierten Anzielrichtung, sodass diese mit der Messrichtung übereinstimmt, aufwändig sein kann und bei einem Anzielen über Durchsicht durch das Teleskop verglichen mit einem Anzielen über Betrachtung des Displaybilds mit dem künstlichen Fadenkreuz keine Unterschiede vorhanden sein sollen, soll bei einer idealen Videototalstation das künstliche Fadenkreuz möglichst exakt dieselbe (Anziel-)Richtung indizieren wie die physische Anzielmarkierung. Um das künstliche Fadenkreuz möglichst treu an einer dementsprechenden Stelle im Displaybild anzuzeigen, wird werksseitig nach Zusammenbau des Vermessungsgeräts eine Kalibrierung (mit Bestimmung von entsprechenden Kalibrierparametern) durchgeführt. Eine solche Werks-Kalibrierung, wie sie dem Fachmann auf dem Gebiet des Vermessungsgerätebaus an sich bekannt ist, stellt eine Beziehung her zwischen dem Mess-Koordinatensystem des Vermessungsgeräts und dem Kamera-Koordinatensystem unter Berücksichtigung der aktuelle Vermessungsgerätegeometrie. Beispiele für solche bekannte Werkskalibrierungen sind etwa in den Patentliteratur-Veröffentlichungen US 7,982,866, US 7,623,224 und EP 1 695 030 beschrieben, wobei jedoch ein hinsichtlich dem erforderlichen Umfeld und den Messbedingungen aufwändiges Vorgehen basierend auf Kamerabildaufnahmen von bekannten Zielmarken erforderlich ist. Im selben Zuge können mit derartigen Werkskalibrierungen in bekannter Weise auch Kalibrierparameter bezüglich Steh- und Kippachsfehler (Richtungsfehler) oder einer Deplatzierung von Kamerakomponententeilen ermittelt werden.

Allerdings bleiben derartige Fehler im Verlauf der Zeit nicht stabil. So werden diese beeinflusst beispielsweise durch physische Erschütterung (etwa während Transports), durch Temperatureinflüsse oder durch andere sich im Verlauf der Zeit ändernde Materialeigenschaften.

Zwar wird daher oft in bekannter Weise vor Erledigung einer Vermessungsaufgabe eine durch den Vermesser selbst im Feld durchführbare Feldkalibrierung bezüglich Steh- und Kippachsfehler gemacht (z.B. bekannt als Zweilagenmessung oder Umschlagsmessung, in welcher ein identisches Ziel nacheinander einmal in einer ersten Lage (Face I) und einmal in einer zweiten, umgeschlagenen Lage des Teleskops (Face II) über das physische Retikel angezielt wird und jeweils die Winkel gemessen werden). Allerdings kann es dann dazu kommen, dass bei späterer Verwendung des Displays zur Anzielung eines Ziels (also des elektroinischen Fadenkreuzes) sich eine Abweichung bei der Zielkoordinatenbestimmung ergeben kann gegenüber einer Anzielung anhand vom physischen Retikel.

Aufgabe der Erfindung ist es, dieses Problem zu vermindern bzw. zu beheben, nämlich dass mit der Zeit und/oder unter bestimmten Bedingungen (wie etwa nach einer Erschütterung) die bei der Werkskalibrierung gespeicherten Kalibrierparameter hinsichtlich der Bild-Position, an welcher das elektronische Fadenkreuz einzublenden ist, hinsichtlich Konkordanz mit der physischen Anzielmarkierung unstimmig bzw. ungenau wird und somit Fehler entstehen können.

Diese Aufgabe wird durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Das die Erfindung betreffende Vermessungsgerät, insbesondere ein Video-Theodolit oder ein Video-Tachymeter, umfasst dabei mindestens eine Basis, eine dazu schwenkbare Stütze, eine dazu schwenkbare Anzieleinheit, Winkelmesser zur Messung von Schwenkstellungen von der Stütze und der Anzieleinheit, eine Auswerte- und Steuereinheit, und ein Display.

Die Anzieleinheit ist dabei mit einer einen optischen Strahlengang definierenden Teleskop-Optik ausgestattet und umfasst ein Objektiv, eine eine Anzielrichtung definierende physische Anzielmarkierung (insbesondere ein Retikel), ein Okular und eine Kamera zur Aufnahme eines Bildes durch das Objektiv.

Die Auswerte- und Steuereinheit enthält dabei gespeicherte Kalibrierparameter bezüglich einer die Anzielrichtung indizierenden Bildposition im aufgenommenen Bild als Anziel-Bildposition und das Display wird dabei entsprechend angesteuert bzw. ist dazu ausgelegt, um ein mit der Kamera aufgenommenes Bild zusammen mit einer Markierung für die Anziel-Bildposition als Anzielhilfe anzuzeigen, insbesondere ein elektronisches Fadenkreuz, das derart dem Bild überlagert bzw. ins Bild eingeblendet dargestellt wird, dass dessen Fadenkreuzmittelpunkt auf die Anziel-Bildposition fällt.

Um nun auch nach Beeinflussung der Geometrie zwischen der physischen Anzielmarkierung und dem Kamerakomponententeil in der Anzieleinheit für eine (nach der Beeinflussung ggf. nicht mehr hinlänglich existierende) Konkordanz zwischen der durch die physische Anzielmarkierung indizierten Anzielrichtung und der durch die Markierung für die Anziel-Bildposition indizierten Richtung zu überprüfen und/oder wiederherzustellen, wird im Rahmen der vorliegenden Erfindung eine Funktion - insbesondere in Form einer an der Benutzer-Geräte-Schnittstelle aufrufbaren Applikation - bereitgestellt, anhand welcher dies in wenig aufwändiger und vergleichsweise weitgehend automatisierter bzw. den Benutzer führender Weise ermöglicht ist.

Dafür ist im Rahmen der Funktion erfindungsgemäss ein spezielles Vorgehen bzw. ein spezieller Ablauf von Anzielungen - und in diesen Anziel-Stellungen jeweils erfolgenden Kalibrierungsmessungen - definiert, der im Rahmen der Funktion zu erfolgen hat.

So müssen dabei Anzielungen eines identischen Ziels sukzessiv mindestens einmal unter Verwendung der physischen Anzielmarkierung und mindestens einmal unter Verwendung der Markierung für die Anziel-Bildposition als Anzielhilfe erfolgen. Geräteseitig sind für diesen definierten Ablauf dabei Ablauf-Informationen in der Auswerte- und Steuereinheit hinterlegt.

Nach Starten der Funktion erfolgen dann automatisch gesteuert bzw. durchgeführt durch die Auswerte- und Steuereinheit
- auf einen (z.B. zum Zwecke einer Namensgebung und späteren einfacheren Bezugnahme als ersten zu bezeichnenden) Auslöser hin, der bei (etwa durch einen Benutzer getätigter) Anzielung des Ziels unter Verwendung der physischen Anzielmarkierung gebbar ist, eine Steuerung derart, dass automatisch durch die Winkelmesser eine erste Schwenkstellung von der Stütze und der Anzieleinheit gemessen und/oder durch die Kamera ein erstes Bild aufgenommen wird, und diese als erste Messdaten erfasst und einem Messdatensatz hinzugefügt werden, und
- auf einen (z.B. zum Zwecke einer Namensgebung und späteren einfacheren Bezugnahme als zweiten zu bezeichnenden) Auslöser hin, der bei (etwa durch einen Benutzer getätigter) Anzielung des Ziels unter Verwendung der Markierung für die Anziel-Bildposition gebbar ist, eine Steuerung derart, dass - zu den ersten Messdaten typkonform - automatisch durch die Winkelmesser eine zweite Schwenkstellung von der Stütze und der Anzieleinheit gemessen und/bzw. durch die Kamera ein zweites Bild aufgenommen wird, und diese als zweite Messdaten erfasst und dem Messdatensatz hinzugefügt werden.

Ferner wird dann automatisch anhand von einer korrelierten Auswertung des Messdatensatzes die Anziel-Bildposition hinsichtlich Konkordanz mit der durch die physische Anzielmarkierung definierten Anzielrichtung überprüft und/oder durch Updaten der gespeicherten Kalibrierparameter re-kalibriert.

Die geräteseitig bereitgestellte Funktion mit ihrem definierten Ablauf und die dafür gespeicherte Applikation kann in einer möglichen Ausführungsform wie folgt näher erläutert werden.

Nach Start der Funktion ist - insbesondere durch den Benutzer - die erste Messstellung mit der Abzieleinheit einzunehmen (insbesondere wobei der Benutzer dazu über einen angezeigten Indikator geräteseitig aufgefordert werden kann). Daraufhin geht das Gerät in einen Auslöser-Erwartungsmodus und -Empfangsmodus. In Kenntnis darüber, unter Verwendung von welcher der beiden Anzielhilfen nun das Ziel vom Benutzer in der ersten Messstellung angezielt wird, wird dann in diesem Modus - auf einen benutzergegebenen Auslöser hin - automatisch die erste Kalibriermessung durchgeführt. Dabei kann - neben oder zusätzlich zur Möglichkeit der geräteseitigen Vorgabe etwa durch geräteseitiges Leiten und Auffordern des Benutzers, welche Anzielhilfe für das erste Anzielen des Ziels nun zu verwenden ist - ggf. auch das benutzergegebene Auslösesignal oder ein Additiv zu diesem Signal die Information darüber enthalten, unter Verwendung von welcher der beiden Anzielhilfen nun das Ziel in dieser ersten Messstellung vom Benutzer angezielt wurde. Nach Erhalt des Auslösers werden dann weitere Komponenten des Vermessungsgeräts so angesteuert und die ersten Messdaten so erfasst, dass diese eine durch die Winkelmesser gemessene erste Schwenkstellung von der Stütze und der Anzieleinheit und/oder ein durch die Kamera aufgenommenes erstes Bild umfassen. Anschliessend werden die erfassten ersten Messdaten automatisch einem Messdatensatz hinzugefügt.

Nach Abschluss des Erfassens der ersten Messdaten kann dann beispielsweise der Benutzer durch einen geräteseitig ausgegebenen Indikator dazu aufgefordert und geleitet werden, die zweite Messstellung mit der Anzieleinheit einzunehmen, in welcher die Anzieleinheit derart auszurichten ist, dass das identische Ziel über die - hinsichtlich der für die erste Kalibriermessung verwendete - andere Anzielhilfe angezielt bzw. kollimiert ist. Daraufhin nimmt das Gerät automatisch wiederum den Auslöser-Erwartungsmodus und -Empfangsmodus ein.

In wiederum etwa durch definierte Vorgabe vorhandener Kenntnis oder durch Erhalt einer Information vom Benutzer darüber, unter Verwendung von welcher der beiden Anzielhilfen nun das Ziel vom Benutzer im Rahmen der zweiten Kalibriermessung angezielt ist, wird dann in diesem Modus - wiederum auf einen benutzergegebenen Auslöser hin - automatisch die zweite Kalibriermessung durchgeführt. Dafür werden zweite Messdaten erfasst, die eine durch die Winkelmesser gemessene zweite Schwenkstellung von der Stütze und der Anzieleinheit und/oder ein durch die Kamera aufgenommenes zweites Bild umfassen.

Eine Reihenfolge bezüglich der Anzielungen, d.h. ob nun zuerst eine Anzielung unter Verwendung der physischen Anzielmarkierung und anschliessend unter Verwendung der elektronischen Markierung zu erfolgen hat oder andersherum, kann dabei prinzipiell frei gesetzt sein/werden, entweder z.B. durch Vordefinition und definierte bekannte Vorgabe oder auch durch freie Wahl benutzerseitig. Die in den Ansprüchen verwendete Bezeichnung der Auslöser und der Messdaten (etc.) als erste und zweite Auslöser und erste und zweite Messdaten (et.) ist dabei rein zur Namensgebung und einfacheren klaren Bezugnahme zu verstehen. Relevant ist dabei - unabhängig von einer tatsächlich zur Anwendung kommenden Reihenfolge der Anzielungen - lediglich dass geräteseitig letztendlich eine entsprechende Information über die jeweils zur Anwendung gekommene Anzielhilfe (d.h. elektronisch oder physisch) vorliegt, die den in den jeweiligen Kalibrierstellungen erfassten Messdaten zugeordnet ist. Diese Information kann - wie zuvor erwähnt - entweder durch Vordefinition oder geräteseitige Vorgabe (etwa in Verbindung mit entsprechender Anleitung und Führung des Benutzers, unter Verwendung von welcher Anzielhilfe die aktuelle Anzielung durchzuführen ist, z.B. durch geräteseitiger Ausgabe eines entsprechenden Indikators wie etwa der Anzeige einer diesbezüglichen graphischen oder schriftlichen Information auf dem Display) oder auch - für den Fall, dass dies frei durch den Benutzer wählbar ist, durch Eingabe einer entsprechenden Information durch den Benutzer (z.B. durch Drücken eines bestimmten Knopfes an Gerät, was ggf. gleichzeitig als Auslöser-Vergabe fungieren kann).

Insbesondere können auch mehrere Durchgänge (also Wiederholungen) von solchen - unter Anwendung von beiden Anzielhilfen erfolgenden - Anzielungen und Kalibriermessungen durchgeführt werden (wozu der Benutzer aufgefordert werden kann oder wozu dem Benutzer wahlweise die Möglichkeit gegeben sein kann, etwa um einem Benutzer zu ermöglichen, bedarfsweise auch eine - vergleichsweise mit höherem Bestimmtheitsgrad erfolgende - Überprüfung und/oder Re-Kalibrierung durchzuführen). Dafür kann dann der Ablauf so definiert sein, dass mehrere Durchgänge von den Anzielungen durchgeführt werden. Im Rahmen der Funktion können dann automatisch gesteuert durch die Auswerte- und Steuereinheit jeweils auf einen weiteren Auslöser hin, der bei durch einen Benutzer erfolgter Anzielung des Ziels unter Verwendung der physischen Anzielmarkierung bzw. unter Verwendung der Markierung für die Anziel-Bildposition als Anzielhilfe gebbar ist, automatisch weitere Messdaten umfassend eine durch die Winkelmesser gemessene weitere Schwenkstellung von der Stütze und der Anzieleinheit und/oder ein durch die Kamera aufgenommenes weiteres Bild erfasst und dem Messdatensatz hinzugefügt werden.

Bei einem so definierten Ablauf mit mehreren Durchgängen von den Anzielungen kann ferner im Rahmen der Funktion die durch die Auswerte- und Steuereinheit automatisch durchgeführte korrelierte Auswertung des Messdatensatzes dann nach Durchführung von einem definierten Durchgang der mehrere Durchgänge von den Anzielungen, insbesondere nach jedem der Durchgänge, als Zwischenauswertung durchgeführt werden, und für die bis zur jeweiligen Zwischenauswertung angesammelten Messdaten ein Bestimmtheitsgrad und/oder Gütegrad hinsichtlich einer Neubestimmung der Anziel-Bildposition ermittelt werden. Die Auswerte- und Steuereinheit kann anhand dieses Bestimmtheitsgrad eine Information dann z.B. ableiten, ob weitere Durchgänge von Anzielungen durchzuführen sind oder ob die Funktion zu beenden ist, insbesondere wobei diese Information als Handlungs-Empfehlung dem Benutzer vermittels vorgesehener Ausgabemittel, insbesondere durch das Display visuell (graphisch oder schriftlich), ausgegeben wird.

Ferner kann in einem speziellen Ausführungsbeispiel der Ablauf so definiert sein, dass die Anzielungen in einem umgeschlagenen Zustand der Anzieleinheit wiederholt werden (d.h. dass die Anzielungen zusätzlich zur Erfolgung in einer ersten Lage der Anzieleinheit [Face I] auch in einer
- relativ zur ersten umgeschlagenen - zweiten Lage der Anzieleinheit [Face II] erfolgen. Im Rahmen der Funktion können dann automatisch gesteuert durch die Auswerte- und Steuereinheit
- auf einen weiteren (z.B. zum Zwecke einer Namensgebung als dritten zu bezeichnenden) Auslöser hin, der durch einen Benutzer bei im umgeschlagenen Zustand der Anzieleinheit (z.B. Face II) erfolgter Anzielung des Ziels unter Verwendung der physischen Anzielmarkierung gebbar ist, automatisch dritte Messdaten umfassend eine durch die Winkelmesser gemessene dritte Schwenkstellung von der Stütze und der Anzieleinheit und/oder ein durch die Kamera aufgenommenes drittes Bild erfasst und dem Messdatensatz hinzugefügt werden,
   - auf einen weiteren (z.B. zum Zwecke einer Namensgebung als vierten zu bezeichnenden) Auslöser hin, der durch einen Benutzer bei im umgeschlagenen Zustand der Anzieleinheit (z.B. Face II) erfolgter Anzielung des Ziels unter Verwendung der Markierung für die Anziel-Bildposition als Anzielhilfe gebbar ist, automatisch zu den dritten Messdaten typ-konforme vierte Messdaten umfassend eine durch die Winkelmesser gemessene vierte Schwenkstellung von der Stütze und der Anzieleinheit und/bzw. ein durch die Kamera aufgenommenes viertes Bild erfasst und dem Messdatensatz hinzugefügt werden.

Um dabei die korrelierte Auswertung zu ermöglichen, ist es relevant, im Rahmen eines Durchgangs von Anzielungen und Kalibriermessungen dabei miteinander vergleichbare Typen von Daten (also beide Male eine Schwenkstellung oder beide Male ein Bild oder beide Male sowohl Schwenkstellung als auch Bild) zu erfassen und dem Messdatensatz hinzuzufügen. Werden solche Durchgänge wiederholt durchgeführt, ist es lediglich relevant, dass im Messdatensatz insgesamt letztendlich miteinander vergleichbare Messdaten gesammelt wurden. Insbesondere auch dann kann es jedoch erforderlich sein, dass wiederum eine Information vorliegt oder zugeordnet ist oder herleitbar ist, welche Anzielhilfe dabei bei der Erfassung der jeweiligen Messdaten jeweils verwendet wurde (und für den Fall, dass dabei in den verschiedenen Durchgängen auf unterschiedliche Ziele und/oder sowohl in Normal-Lage (Face I) als auch in Umschlag-Lage (Face II) der Anzieleinheit angezielt wurde, auf welches Ziel und ggf. in welcher Lage jeweils bei welchem Durchgang unter Verwendung von welcher Anzielhilfe die jeweiligen Messdaten des Messdatensatzes erfasst wurden).

Je nach dem, welcher Datentyp (Winkel-Stellungen oder Bilddaten) oder ob ggf. beide Datentypen dabei letztendlich im Rahmen des Messdatensatzes als jeweilige erste, zweite, und ggf. weitere Messdaten gesammelt wurden, sind diese auch beim korrelierten Auswerten entsprechend weiterzuverarbeiten.

Umfassen die ersten und zweiten Messdaten dabei beispielsweise zumindest eine erste und zweite Schwenkstellung, so kann im Rahmen der Funktion bei der korrelierten Auswertung des Messdatensatzes ein Unterschied zwischen der ersten und der zweiten Schwenkstellung ermittelt werden. Dieser Unterschied kann dann - unter Anwendung von gespeicherten Parametern bzgl. der Kamerageometrie und deren optische Projektionseigenschaften - für das Überprüfen und/oder das Re-Kalibrieren herangezogen werden.

Insbesondere kann dieser Unterschied - unter Anwendung von den gespeicherten Parametern bzgl. der Kamerageometrie und den optischen Projektionseigenschaften der Kamera - in einen Bildpositionsversatz übersetzt werden, um welcher die Anziel-Bildposition von einer neuen Soll-Anziel-Bildposition abweicht. Der so erhaltene Bildpositionsversatz kann dann für die Re-Kalibrierung auf die Anziel-Bildposition angewendet werden, sodass die gespeicherten Kalibrierparameter derart upgedatet werden, dass diese die neue Soll-Anziel-Bildposition als Anziel-Bildposition wiedergeben.

Umfassen die ersten und zweiten Messdaten dabei beispielsweise zumindest ein erstes und zweites Bild, so kann im Rahmen der Funktion bei der korrelierten Auswertung des Messdatensatzes anhand von Bilderkennung und unter Heranziehung des zweiten Bilds (in welchem Information darüber, welches Objekt als Ziel verwendet und anvisiert ist, direkt auslesbar ist) eine Identifikation des Ziels im ersten Bild erfolgen und eine Bildposition des identifizierten Ziels im ersten Bild als Ziel-Bildposition bestimmt werden. Daraus kann folglich eine Abweichung der Ziel-Bildposition von der Anziel-Bildposition ermittelt und diese Abweichung für das Überprüfen und/oder das Re-Kalibrieren herangezogen werden.

Insbesondere kann z.B. anhand dieser Abweichung direkt die Anziel-Bildposition überprüft werden (wobei beispielsweise ein Toleranzbereich für eine solche Abweichung vorgegeben ist und gecheckt wird, ob die Abweichung innerhalb des Toleranzbereichs liegt). Zudem kann die die Anziel-Bildposition auch direkt anhand von dieser Abweichung durch Updaten der gespeicherten Kalibrierparameter re-kalibriert, insbesondere wobei die gespeicherte Kalibrierparameter derart upgedatet werden, dass die upgedateten Kalibrierparameter dann neu die ermittelte Ziel-Bildposition als die Anziel-Bildposition wiedergeben.

Weist dabei der Messdatensatz - hinsichtlich einer Ableitung von Information über eine Konkordanz der elektronischen (digitalen) Anzielmarkierung mit der physischen Anzielmarkierung - eine Redundanz auf (z.B. durch wiederholte Durchführung der Anzielungen und Kalibriermessungen und/oder durch Erfassen von Messdaten beider Typen im Rahmen eines Durchgangs der Anzielungen), so können die jeweils - hinsichtlich Typ sowie ggf. hinsichtlich des anvisierten Ziels bzw. der zur Anwendung gekommenen Lage der Anzieleinheit (Face I oder Face II) - miteinander vergleichbaren Messdaten paarweise miteinander korreliert ausgewertet werden (etwa als Zwischenauswertungen), sodass dann z.B. im Rahmen einer Gesamtauswertung über aufakkumulierte Zwischenauswertungen gemittelt werden kann.

Enthält der Messdatensatz also hinsichtlich der Überprüfung und/oder Re-Kalibrierung der Anziel-Position redundante Messdaten, so kann eine solche Redundanz im Rahmen der Funktion automatisch durch die Auswerte- und Steuereinheit genutzt werden für eine Mittelung, sodass die Genauigkeit für die Überprüfung bzw. Re-Kalibrierung steigerbar ist, und/oder eine Ermittlung eines Bestimmtheitsgrads oder Gütegrads der Überprüfung bzw. Re-Kalibrierung. Alternativ oder zusätzlich kann eine solche Redundanz jedoch auch genutzt werden für eine konkomitierende (also eine in zeitlichem und vorgehensseitigem Zusammenhang mit der Überprüfung bzw. Re-Kalibrierung der Anziel-Bildposition stehende) Überprüfung bzw. Re-Kalibrierung von mindestens einem von folgenden weiteren Kalibrierparametern:
- einem Parameter bezüglich einem Richtungsfehler als Deviation der durch die physische Anzielmarkierung definierten Anzielrichtung von einer tatsächlichen Messachse [auch Kipp- und Stehachsenfehler genannt],
- einem Parameter bezüglich einem Fehler der Winkelmesser,
- einem Parameter bezüglich einer Kamerageometrie der Kamera,
- einem Parameter bezüglich einer Projektionseigenschaft der Kamera oder
- einem Parameter bezüglich eines Fehlers der optischen Achse der Kamera.

In einer speziellen Ausführungsform der Erfindung können - wie zuvor an verschiedenen Stellen bereits kurz erwähnt - Ausgabemittel zur Ausgabe von Indikatoren vorhanden sein, insbesondere wobei das Display die Ausgabemittel zur visuellen (graphischen oder schriftzugweisen) Ausgabe darstellen können. Die Ausgabemittel können dann beispielsweise durch die Auswerte- und Steuereinheit im Rahmen der Funktion derart automatisch angesteuert werden, dass ein Benutzer anhand der ausgegebenen Indikatoren durch den Ablauf von Anzielungen geführt wird, insbesondere wobei
- ein Indikator angezeigt wird zur Aufforderung des Benutzers zur jeweiligen Durchführung einer der Anzielungen entweder unter Verwendung der physischen Anzielmarkierung oder unter Verwendung der Markierung für die Anziel-Bildposition als Anzielhilfe, insbesondere wobei zudem jeweils indiziert wird, ob die jeweilige Anzielung in umgeschlagenem Zustand der Anzieleinheit durchzuführen ist oder nicht,
- ein Indikator angezeigt wird als Angabe dafür, dass eine jeweilige automatische Erfassung von Messdaten auf einen jeweiligen Auslöser hin erfolgreich abgeschlossen ist,
- nach Abschluss einer jeweiligen automatischen Erfassung von Messdaten auf einen jeweiligen Auslöser hin ein Indikator angezeigt wird als Angabe dafür, dass und welche nächste Anzielung im Rahmen des definierten Ablaufs durchzuführen ist, und/oder
- nach Abschluss einer jeweiligen automatischen Erfassung von Messdaten auf einen jeweiligen Auslöser hin ein Indikator angezeigt wird als Angabe dafür, das alle Anzielungen des Ablaufs abgeschlossen sind, insbesondere zudem mit ergänzender Angabe darüber, ob der anhand der erfolgten Anzielungen gesammelte Messdatensatz die Bild-Position hinlänglich profund überprüfbar macht bzw. die Bild-Position mit hinreichender Genauigkeit und Bestimmtheit updatebar macht.

Weist das Vermessungsgerät dabei einen Temperatursensor auf, können die gespeicherten Kalibrierparameter zudem eine temperaturabhängige Funktion für die Anziel-Bildposition enthalten, sodass die auf dem Display anzeigbare Markierung für die Anziel-Bildposition entsprechend einer aktuellen Temperatur derart setzbar ist, dass die bei unterschiedlichen Temperaturen jeweils unterschiedlich vorliegende Geometrie zwischen der physischer Anzielmarkierung und dem Displaykomponententeil in Teleskop für das Setzen der Anziel-Bildposition (damit diese jeweils korrespondiert zur physischen Anzielmarkierung) berücksichtigt wird. Im Rahmen der Funktion kann dann automatisch gesteuert durch die Auswerte- und Steuereinheit durch den Temperatursensor eine Temperatur erfasst werden und diese Temperatur durch die Auswerte- und Steuereinheit für die Überprüfung bzw. Re-Kalibrierung berücksichtigt werden.

Für die Kamera ist dabei abhängig von der Pixelanzahl des verwendeten Kamera-Flächensensor (welcher in bekannter Weise ein CCD- oder ein CMOS-Sensor sein kann) eine Kamerapixelauflösung definiert, wodurch das aufnehmbare Bild eine definierte Bildpixelauflösung aufweist.

Dennoch kann im Rahmen der Funktion automatisch durch die Auswerte- und Steuereinheit die Anziel-Bildposition ggf. mit Sub-Bildpixelauflösung überprüft und/oder durch Updaten der gespeicherten Kalibrierparameter re-kalibriert werden.

Ferner ist auch für das Display - abhängig vom verwendeten Display - eine gewisse Displaypixelauflösung definiert, die bei derartigen Vermessungsgeräten für gewöhnlich kleiner ist als die Kamerapixelauflösung.

Dies ermöglicht unter anderem eine Darstellung des Kamerabildes in digitalen Zoomstufen, ohne dass damit unbedingt eine Bild-Anzeigequalitätsverschlechterung einhergeht oder dass dafür unbedingt sofort eine Interpolation erforderlich wäre.

Insbesondere aufgrund der oft vergleichsweise geringen Displayauflösung kann vorteilhaft in einer Weiterbildung der Erfindung die Markierung für die Anziel-Bildposition nun derart in einer Grau- und/oder Farbstufendarstellung angezeigt werden, dass dadurch benutzeraugenscheinlich die Bild-Position mit Sub-Displaypixelauflösung indiziert wird.

Für die Erfassung von bildlichen Messdaten im Rahmen der Kalibriermessungen und das Einblenden der elektronischen Markierung im Bild ist dabei ggf. jeweils ein entsprechender aktuell zur Anwendung kommender digitaler Zoomfaktor sowie Bild-Anzeigeausschnitt zu berücksichtigen.

Das hier durchgängig zuvor beschriebene Bild, das durch die koaxiale Kamera erfasst werden kann, stellt - wie dies gattungsgemäss üblich und im Stand der Technik hinlänglich bekannt ist - vorteilhaft für die Anzielung eines Ziels ein Live-Bild der Kamera dar, also eine von der Kamera praktisch in Echtzeit aufgenommene Bilderserie, die praktisch in Echtzeit auf dem Display angezeigt werden kann.

Wie dies ebenso im Stand der Technik hinlänglich für geodätische Vermessungsgeräte (wie für einen Video-Tachymeter oder eine Video-Totalstation) bekannt ist, kann in die Anzieleinheit ferner ein koaxialer Laser-Entfernungsmesser integriert sein.

Zudem kann das Vermessungsgerät eine mindestens die Basis, die Stütze, die Anzieleinheit und die Winkelmesser - sowie insbesondere auch die Auswerte- und Steuereinheit und das Display - umfassende Basisstation aufweisen (oft in dieser Form als das eigentliche Vermessungsgerät betrachtet). Allerdings kann das Vermessungsgerät insbesondere neben der Basisstation auch eine datenmässig mit der Basisstation verbundene und körperlich unabhängige Peripherie-Fernsteuer-Einheit aufweisen, wobei das Display und die Auswerte- und Steuereinheit entweder in der Peripherie-Fernsteuer-Einheit, oder in der Basisstation, oder - je nach Bedarf verwendbar - in der Peripherie-Fernsteuer-Einheit und der Basisstation vorgesehen sind.

Ferner kann die erfindungsgemäss bereitgestellte Funktion auch geräteseitig vollautomatisch Ablaufen, wie dies im Folgenden beispielhaft erläutert wird.

Wie dies im Stand der Technik bekannt ist, kann das Vermessungsgerät eine automatische Anziel-Funktion und ggf. automatisch Zielverfolgungs-Funktion (ATR: "Automatic Target Recognition") aufweisen, für die eine weitere separate ATR-Lichtquelle - z.B. ein Multimodefaserausgang, der Licht mit einer definierten Wellenlänge emittiert - sowie ein spezieller ATR-Kamerasensor zusätzlich im Teleskop integriert sein, sodass bei zumindest grober Anzielung eines retroreflektierenden Ziels das ATR-Licht retroreflektiert wird und somit ein Lichtreflexfleck auf dem ATR-Kamerasensor erzeugt wird, welcher hinsichtlich seiner Auftreffposition auswertbar ist und dadurch eine hockpräzise automatische Anzielung oder Verfolgung über automatisches motorisiertes Ausrichtungsändern der Anzieleinheit bewirkt werden kann. Bei Anzielung über die kalibrierte ATR-Funktion kann die Messachse des Vermessungsgeräts also automatisch auf ein retroreflektierendes Ziel ausgerichtet werden.

Weist das Vermessungsgerät nun eine solche ATR-Funktion auf und ist ferner ein Richtungsfehler von der durch die physische Anzielmarkierung indizierten Anzielrichtung gegenüber der Messachse bekannt, dann kann anhand von der ATR-Funktion nun also auch im Rahmen der erfindungsgemässen Funktion eine automatische hochpräzise Anzielung eines retroreflektierenden Ziels erfolgen. Die bei derartiger, automatischer Anzielung erfassbaren Messdaten können dann - natürlich unter Berücksichtigung des bekannten Richtungsfehlers - stellvertretend als für eine Anzielung unter Verwendung der physischen Anzielmarkierung gespeicherte Messdaten dem Messdatensatz hinzugefügt werden.

Zudem kann auch - wie dies etwa in den Patentliteratur-Publikationen EP 2 405 236 oder EP 2 397 816 beschrieben ist - eine vollautomatische Anzielung des Ziels erfolgen, die zur Anwendung kommen kann analog oder ersatzweise zu einer durch einen Benutzer anhand der elektronischen Anzielhilfe erfolgten Anzielung.

Bei einer solchen automatischen Anzielung über das Kamera-Bild kann eine automatische präzise Anzielung des Ziels (für das ggf. ein Muster oder eine Schablone elektronisch hinterlegt ist) über Bildauswerten des aufgenommenen Kamerabilds (d.h. Matchen der Schablone mit im Bild aufgenommenem Ziel) erfolgen und ein automatisches motorisiertes Ausrichten der Anzieleinheit derart bewirkt werden, dass die Anziel-Bildposition (also z.B. der Mittelpunkt des elektronischen Fadenkreuzes) auf dem relevanten Ziel-Mittelpunkt (d.h. z.B. auf einem definierten Ziel-Mittelpunkt der sich in gematchtem Zustand befindenden Schablone) zum liegen kommt.

Die bei derartiger, automatischer Anzielung dann erfassbaren Messdaten können (obwohl eine Anzeige des Bildes und einer Markeirung für die Anziel-Bildposition auf einem Display dafür nicht zwingend erforderlich ist) als für eine Anzielung unter Verwendung der elektronischen Markierung als Anzielhilfe gespeicherte Messdaten dem Messdatensatz hinzugefügt werden.

Ferner betrifft die Erfindung auch ein mit einem Vermessungsgerät durchzuführendes Verfahren zur Überprüfung und/oder Re-Kalibrierung einer Anziel-Bildposition, die durch Kalibrierparameter gegeben ist und für die eine Markierung als Anzielhilfe auf einem Display des Vermessungsgeräts zusammen mit einem durch eine Kamera des Vermessungsgeräts anzeigbarem Bild darstellbar ist, wobei die Anziel-Bildposition auf eine durch eine physische Anzielmarkierung des Vermessungsgeräts definierte Anzielrichtung Bezug nimmt, und wobei das Vermessungsgerät ausgestattet ist mit
- einer Basis,
- einer relativ zur Basis um eine erste Achse schwenkbaren Stütze,
- einer relativ zur Stütze um eine zweite Achse schwenkbaren Anzieleinheit mit einer einen optischen Strahlengang definierenden Teleskop-Optik mit
   □ einem Objektiv,
   □ der die Anzielrichtung definierenden physischen Anzielmarkierung, insbesondere einem Retikel,
   □ einem Okular und
   □ der Kamera zur Aufnahme eines Bildes durch das Objektiv,
- Winkelmesser zur Messung von Schwenkstellungen von der Stütze und der Anzieleinheit, und
- dem Display zur Anzeige eines aufgenommenen Bildes zusammen mit der Markierung, insbesondere zur Anzeige des Bildes mit überlagertem elektronischem Fadenkreuz, dessen Fadenkreuzmittelpunkt auf die Anziel-Bildposition fällt.

Das erfindungsgemässe Verfahren ist dabei gekennzeichnet durch einen Ablauf von mindestens einem Durchgang von
- einem Anzielen eines Ziels unter Verwendung der physischen Anzielmarkierung,
- einem Erfassen von ersten Messdaten umfassend eine durch die Winkelmesser gemessene erste Schwenkstellung von der Stütze und der Anzieleinheit und/oder ein durch die Kamera aufgenommenes erstes Bild und einem Hinzufügen dieser ersten Messdaten zu einem Messdatensatz,
- einem Anzielen des identischen Ziels unter Verwendung der Markierung für die Anziel-Bildposition als Anzielhilfe,
- einem Erfassen von zu den ersten Messdaten typ-konformen zweiten Messdaten umfassend eine durch die Winkelmesser gemessene zweite Schwenkstellung von der Stütze und der Anzieleinheit und/oder ein durch die Kamera aufgenommenes zweites Bild und einem Hinzufügen dieser zweiten Messdaten zum Messdatensatz,
sowie dadurch, dass automatisch seitens des Vermessungsgeräts ein korreliertes Auswerten des Messdatensatzes erfolgt, anhand welchem die Anziel-Bildposition hinsichtlich Konkordanz mit der durch die physische Anzielmarkierung definierten Anzielrichtung überprüft und/oder durch Updaten der Kalibrierparameter re-kalibriert wird.

Die im Rahmen des oben beschriebenen Vermessungsgeräts genannten speziellen Aspekte, Ausführungsformen und Weiterbildungen können dabei analog ebenso auch auf dieses Verfahren angewendet werden.

Ferner betrifft die Erfindung auch ein Computerprogrammprodukt mit Programmcode, der auf einem maschinenlesbaren Träger gespeichert ist und gespeicherte Informationen enthält über
- eine Anziel-Bildposition, die durch Kalibrierparameter gegeben ist und für die eine Markierung als Anzielhilfe auf einem Display eines Vermessungsgeräts zusammen mit einem durch eine Kamera des Vermessungsgeräts anzeigbarem Bild darstellbar ist, wobei die Anziel-Bildposition auf eine durch eine physische Anzielmarkierung definierte Anzielrichtung des Vermessungsgeräts Bezug nimmt, sowie
- einen Ablauf von Anzielungen eines identischen Ziels sukzessiv mindestens einmal unter Verwendung der physischen Anzielmarkierung und mindestens einmal unter Verwendung der Markierung für die Anziel-Bildposition als Anzielhilfe.

Das erfindungsgemässe Computerprogrammprodukt mit Programmcode ist dabei konfiguriert zum - wenn das Programm auf der Steuer- und Auswerteeinheit des oben beschriebenen erfindungsgemässen Vermessungsgeräts ausgeführt wird erfolgenden - automatischen Steuern bzw. Durchführen der folgenden Schritte:
- auf einen ersten Auslöser hin, der bei erfolgter Anzielung des Ziels unter Verwendung der physischen Anzielmarkierung gebbar ist, erfolgendes Erfassen von ersten Messdaten umfassend eine über die Winkelmesser gemessene erste Schwenkstellung von der Stütze und der Anzieleinheit und/oder einem durch die Kamera aufgenommenen ersten Bild und Hinzufügen dieser ersten Messdaten zu einem Messdatensatz,
- auf einen zweiten Auslöser hin, der bei erfolgter Anzielung des Ziels unter Verwendung der Markierung für die Anziel-Bildposition als Anzielhilfe gebbar ist, erfolgendes Erfassen von zu den ersten Messdaten typ-konformen zweiten Messdaten umfassend eine durch die Winkelmesser gemessene zweite Schwenkstellung von der Stütze und der Anzieleinheit und/oder einem durch die Kamera aufgenommenen zweiten Bild und Hinzufügen dieser zweiten Messdaten zum Messdatensatz,
- Überprüfen und/oder durch Updaten der gespeicherten Kalibrierparameter erfolgendes Re-Kalibrieren der Anziel-Bildposition hinsichtlich Konkordanz mit der durch die physische Anzielmarkierung definierten Anzielrichtung anhand von einer korrelierten Auswertung des Messdatensatzes.

Die im Rahmen des oben beschriebenen Vermessungsgeräts genannten speziellen Aspekte, Ausführungsformen und Weiterbildungen können dabei analog ebenso auch auf dieses Computerprogrammprodukt angewendet werden.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1&5: jeweils ein erfindungsgemässes, als Totalstation ausgebildetes geodätisches Vermessungsgerät;
- Fig. 2-4: mögliche Ausführungsformen der Anzieleinheit mit Teleskop-Optik von einem Vermessungsgerät;
- Fig. 6: ein geodätisches Vermessungssystem mit Basisstation und Peripherie-Fernsteuer-Einheit;
- Fig. 7-11&14: Visualisierungen von möglichen Vorgehen und Abläufe im Rahmen der erfindungsgemässen Funktion;
- Fig. 12: eine Veranschaulichung von einer Möglichkeit zum digitalen Zoomen im auf dem Display dargestellten Bild; und
- Fig. 13: ein Beispiel für ein Anzeigen einer Markierung für die Anziel-Bildposition.

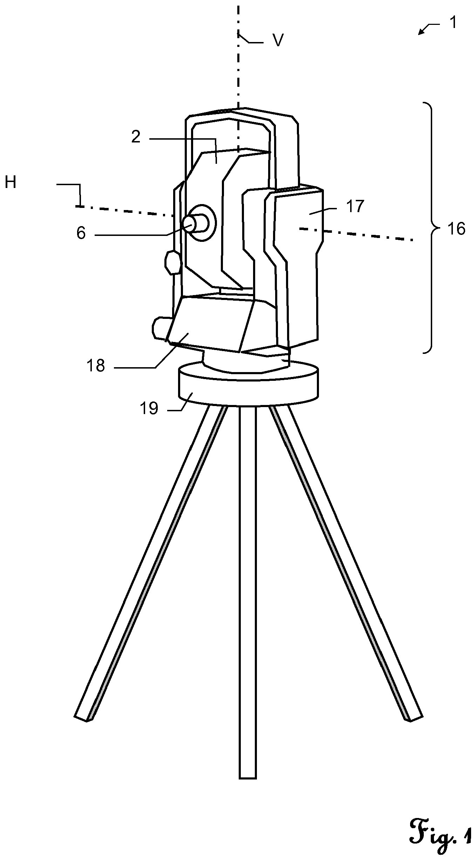

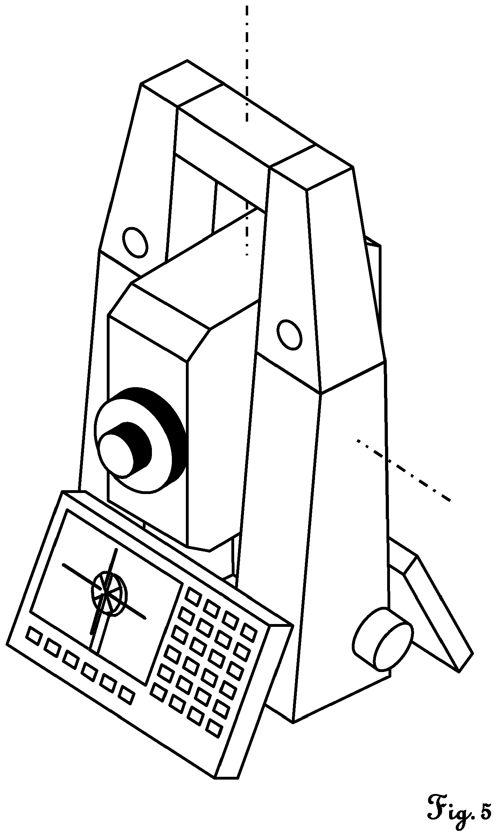

Figuren 1 und 5 zeigen ein erfindungsgemässes, als Totalstation ausgebildetes geodätisches Vermessungsgerät 1 zur Messung von Horizontalwinkeln, Vertikalwinkeln (was Schwenkstellungen von der Stütze und der Anzieleinheit entspricht) und Distanzen zu einem beabstandeten und anvisierten Ziel.

Die Totalstation kann - wie dies in Figur 1 gezeigt ist - auf einem Stativ angeordnet sein, wobei eine Basis 19 der Totalstation direkt und fest mit dem Stativ verbunden ist. Der Hauptkörper der Totalstation, der auch als Oberteil 16 bezeichnet wird, ist relativ zur Basis 19 um eine vertikale Stehachse V drehbar.

Das Oberteil 16 weist dabei eine - z.B. durch zwei Säulen gebildete - Stütze 17, eine zwischen den Säulen um die horizontale Kippachse H drehbar gelagerte Visiereinrichtung 2 sowie ein elektronisches Datenverarbeitungs- und Anzeige-Modul 18, welche durch eine Steuer- und Auswerteeinheit sowie ein Display gebildet wird, auf. Das elektronische Datenverarbeitungs- und Anzeige-Modul 18 kann in bekannter Weise zur Steuerung des Vermessungsgeräts 1 sowie zur Verarbeitung, Anzeige und Speicherung von Messdaten ausgebildet sein.

Die Anzieleinheit bzw. Visiereinrichtung 2 ist an der Stütze 17 um eine horizontale Kippachse H drehbar angeordnet und kann somit zur Ausrichtung auf ein Zielobjekt relativ zur Basis 19 horizontal und vertikal geschwenkt bzw. gekippt werden. Dabei ist die Visiereinrichtung als eine gemeinsame Visiereinrichtungs-Baueinheit ausgeführt, wobei zumindest ein Objektiv, eine Fokussieroptik, ein koaxialer Kamerasensor, eine optische Anziel-Strichkreuz-Platte und das Okular 6 in bzw. an einem gemeinsamen Visiereinrichtungs-Gehäuse angeordnet sind.

Mittels der Visiereinrichtung 2 kann ein Zielobjekt angezielt und die Entfernung von der Totalstation zu dem Zielobjekt elektrosensorisch erfasst werden. Weiters sind Mittel zum elektrosensorischen Erfassen der Winkelausrichtung des Oberteils 16 relativ zur Basis 19 und der Visiereinrichtung 2 relativ zur Stütze 17 vorgesehen. Diese elektrosensorisch erfassten Messdaten werden der Steuer- und Auswerteeinheit zugeführt und von dieser verarbeitet, so dass die Position des Zielpunkts relativ zur Totalstation durch Datenverarbeitungs- und Anzeige-Modul 18 ermittelbar, graphisch anzeigbar und speicherbar ist.

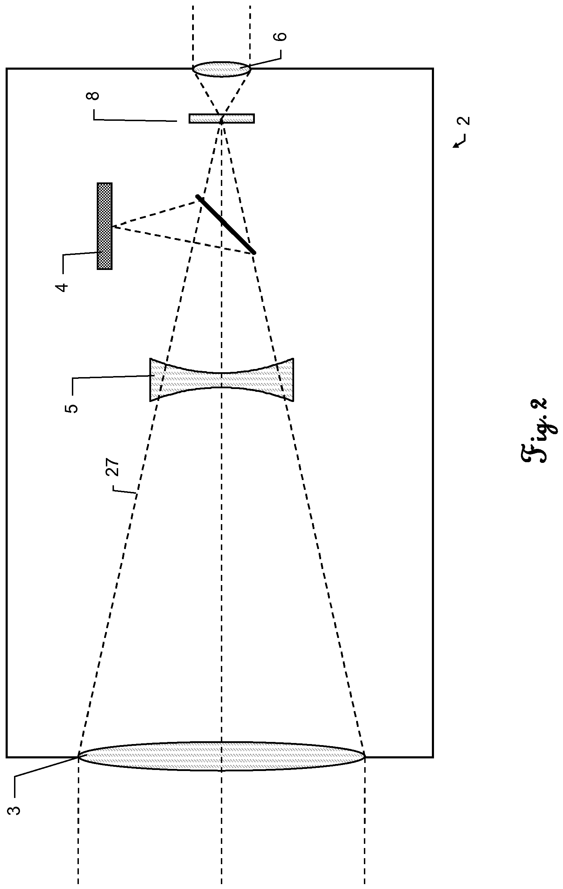

Figuren 2, 3 und 4 zeigen schematisch mögliche Ausführungsformen von der Anzieleinheit mit Teleskop-Optik, wie diese auch bereits im Stand der Technik hinlänglich bekannt sind.

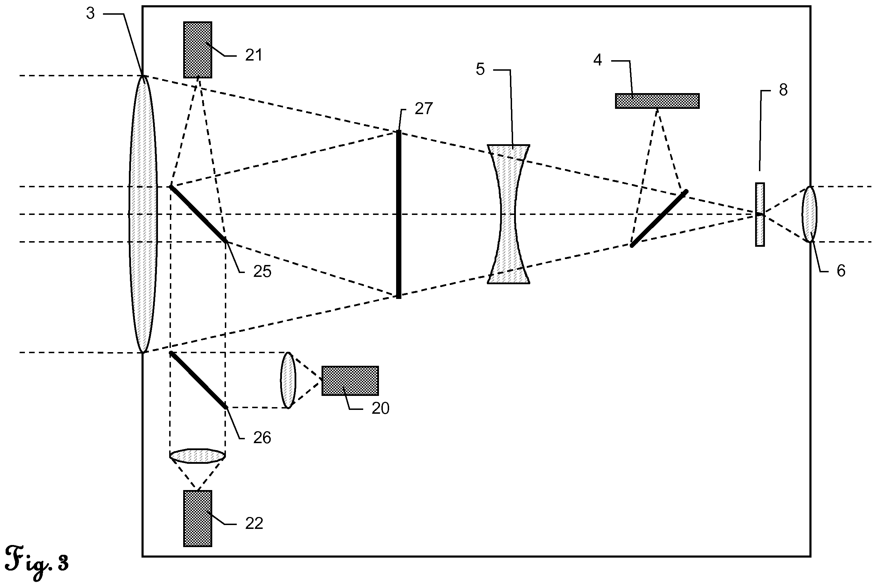

Figur 2 zeigt dabei eine vereinfachte Form der Ausführungsform, die in Figur 3 gezeigt ist. Figur 3 zeigt dabei eine refraktive Ausführungsform für eine erfindungsgemässe Visiereinrichtungsoptik.

Die Visiereinrichtungsoptik weist das Objektiv 3, die Fokussieroptik 5, einen - koaxial zur optischen Achse der Visiereinrichtung 2 ausgerichteten - Kamerasensor 4 zur Erfassung eines Kamera-Bildes, eine Fadenkreuz-Strichplatte 8 sowie ein Okular 6 auf.

Der Kamerasensor 4 ist dabei mit einem elektronischen Grafikprozessor zur Generierung eines Anzeigebilds aus dem erfassten Kamera-Bild verbunden. Grafikprozessor ist wiederum mit dem Display verbunden, sodass das generierte Anzeigebild anhand des Displays dargestellt werden kann.

Das Objektiv 3 kann z.B. auch mehrlinsig aufgebaut oder panfokal - mit veränderlichem Sichtfeld - ausgeführt sein.

Für die Distanzmessung und die automatische Zielsuchfunktion sind eine EDM-Laserquelle 20 bzw. eine Feinanziel-Lichtquelle 22 vorgesehen, wobei die EDM-Laserstrahlen bzw. die Feinanziel-Strahlen anhand eines ersten und zweiten Strahlkombinierers 25,26 - wie beispielsweise Strahlteilerflächen mit dichroitischer Beschichtung - entsprechend ein- und ausgekoppelt werden.

Die EDM-Laserquelle 20 kann z.B. EDM-Laserstrahlen im visuellen Bereich - etwa mit einer Wellenlänge von 630 nm - emittieren, sodass ein Messfleck am Zielobjekt sichtbar ist.

Zwischen dem ersten Strahlkombinierer 25 und der Fokussieroptik 5 kann dabei Strahlauskoppler 27 vorhanden sein, der die EDM-Laserstrahlen auskoppelt, hingegen das visuelle Spektrum vorteilhaft möglichst ungehindert transmittiert. Die ausgekoppelten EDM-Laserstrahlen werden durch den Strahlkombinierer 25 auf einen EDM-Empfänger 21 gelenkt.

Das in seiner Stellung veränderliche Fokussierelement 5 kann alternativ auch mehrlinsig ausgebildet sein. Vorteilhaft weist das Fokussierelement 5 eine stabile, präzise reproduzierbare Position für Objekte im Unendlichen auf, sodass eine möglichst gute erzielbare Genauigkeit bei der automatischen Feinanzielung gewährleistet werden kann.

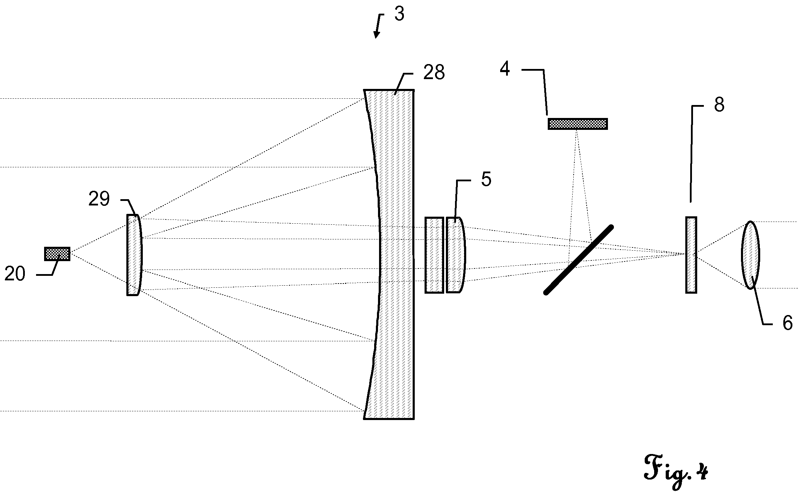

Figur 4 zeigt eine weitere Ausführungsform für eine erfindungsgemässe Visiereinrichtungsoptik. In diesem Fall ist die Visiereinrichtung als katadioptrisches System mit Spiegeloptik ausgeführt. Ein erster, konkaver Spiegel 28 dient dabei als Objektiv 3.

Ein zweiter, kleinerer Spiegel 29 ist für EDM-Laserstrahlen durchlässig ausgebildet, sodass die anhand der EDM-Laserquelle 20 ausgesendeten EDM-Laserstrahlen für die Distanzmessung durch den zweiten Spiegel 29 transmittiert werden.

Anhand der mehrlinsigen Fokussieroptik 5 wird ein Bild des Sichtfeldbereichs auf den Kamerasensor 4 fokussiert und als Kamera-Bild erfasst. Zudem wird auch in der Ebene der Strichplatte 8 ein Zwischenbild erzeugt, das von einem Benutzer durch das Okular 6 betrachtet werden kann.

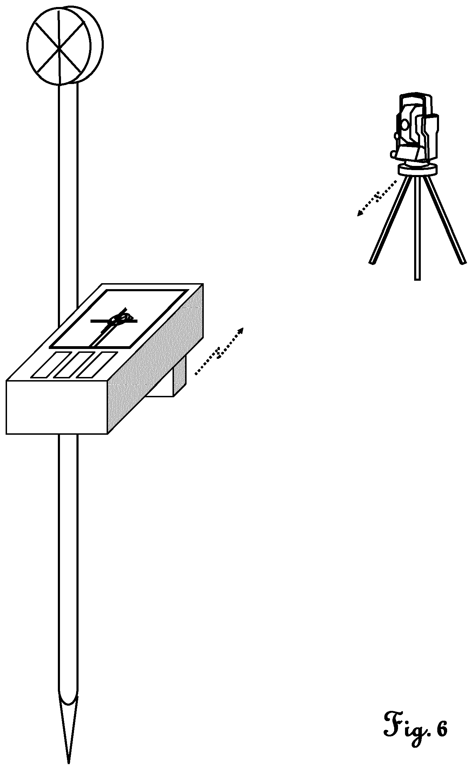

Figur 6 zeigt eine körperlich von der Basisstation (im Hintergrund ebenso gezeigt) unabhängige Peripherie-Fernsteuer-Einheit mit eigenem zusätzlichem Display und eigener zusätzlicher Auswerte- und Steuereinheit.

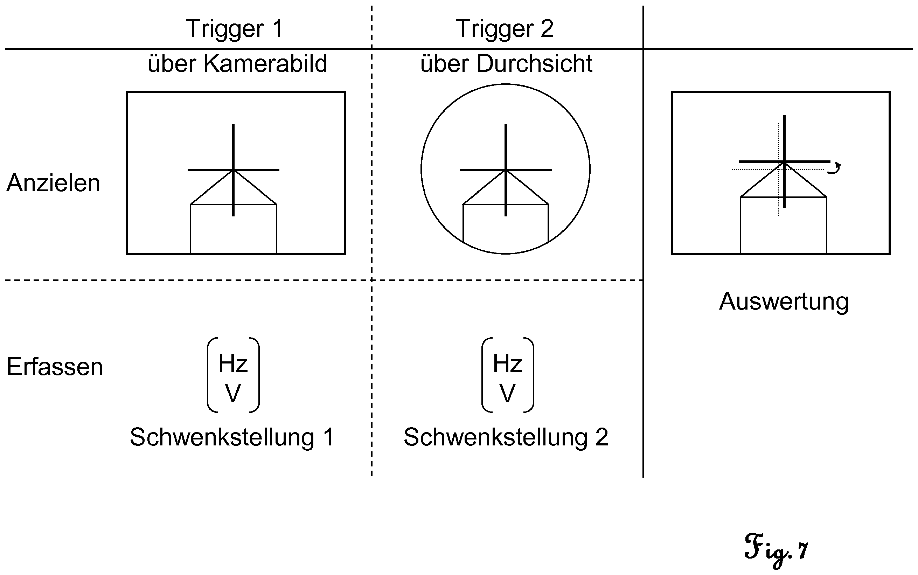

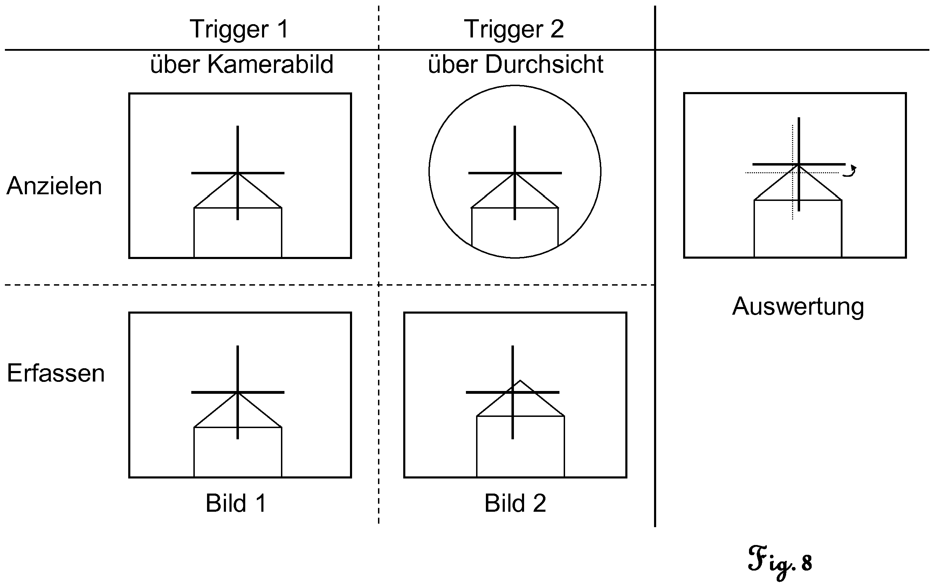

Figuren 7 bis 11 und 14 erklären mögliche Vorgehen und Abläufe im Rahmen der erfindungsgemässen Funktion.

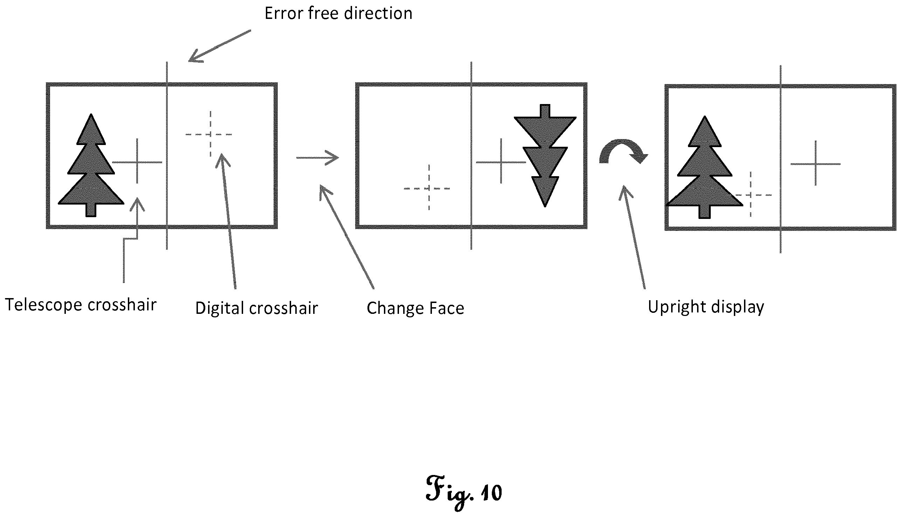

In Figur 10 bedeuten dabei die in die Figur integrierten Beschriftungen dabei das Folgende:

| | |
|---|---|
| "Digital crosshair": | indizierte Richtung durch das digitale Fadenkreuz |
| "Error free direction": | fehlerfreie Anzielrichtung |
| "Telescope crosshair": | indizierte Anzielrichtung durch das Retikel als physische Anzielmarkierung in der Teleskop-Optik |
| "Change Face": | Umschlag der Anzieleinheit, also Wechsel/Umschlag der Lage (Face) der Anzieleinheit |
| "Upright display": | Aufrichten des Bildes im Display (Bildumkehr) |

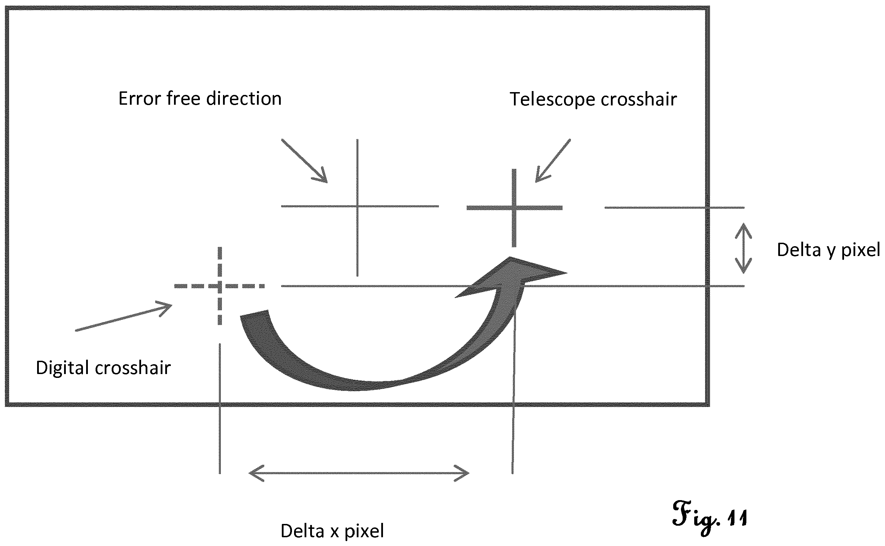

In Figur 11 bedeuten dabei die in die Figur integrierten Beschriftungen dabei das Folgende:

| | |
|---|---|
| "Digital crosshair": | indizierte Richtung durch das digitale Fadenkreuz |
| "Error free direction": | fehlerfreie Anzielrichtung |
| "Telescope crosshair": | indizierte Anzielrichtung durch das Retikel als physische Anzielmarkierung in der Teleskop-Optik |
| "Delta x pixel": | Pixelunterschied in x-Richtung |
| "Delta y pixel": | Pixelunterschied in y-Richtung |

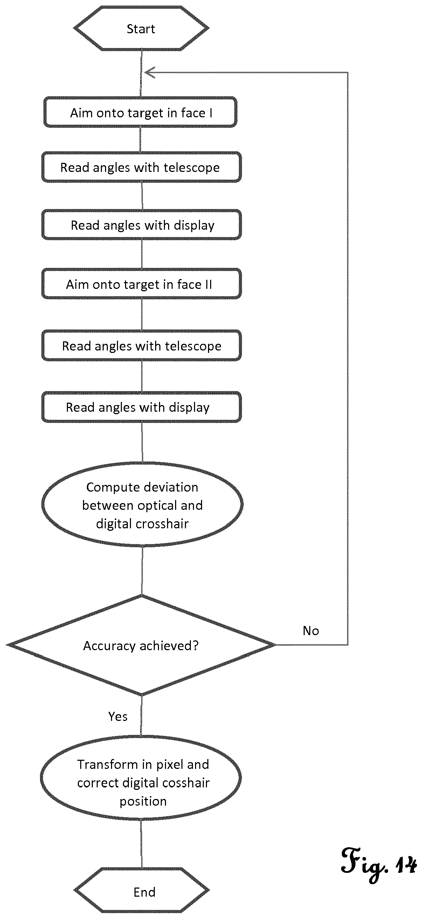

In Figur 14 bedeuten dabei die in die Figur integrierten Beschriftungen dabei das Folgende:

### "Aim onto target in face I":

Anzielen des Ziels in Lage 1 der Anzieleinheit (Face I).

### "Read angles with telescope":

Auslesen der Winkel (Schwenkstellung der Anzieleinheit) mit Anzielung unter Nutzung des Durchsichtpfads des Teleskops (Anzieleinheit), also der physischen Anzielmarkierung.

### "Read angles with display":

Auslesen der Winkel (Schwenkstellung der Anzieleinheit) mit Anzielung unter Nutzung dea Displays (Anzieleinheit), also der im Bild angezeigten künstlichen Markierung für die Anziel-Bildposition.

### "Aim onto target in face II":

Anzielen des Ziels in Lage 2 der Anzieleinheit (Face II), also nach Umschlag der Anzieleinheit.

### "Read angles with telescope":

Auslesen der Winkel (Schwenkstellung der Anzieleinheit) mit Anzielung unter Nutzung des Durchsichtpfads des Teleskops (Anzieleinheit), also der physischen Anzielmarkierung.

### "Read angles with display":

Auslesen der Winkel (Schwenkstellung der Anzieleinheit) mit Anzielung unter Nutzung des Displays (Anzieleinheit), also der im Bild angezeigten künstlichen Markierung für die Anziel-Bildposition.

### "Compute deviation between optical and digital crosshair":

Berechnung des Unterschieds (der Abweichung) zwischen dem optischen (physischen) und dem digitalen (künstlichen, elektronischen) Fadenkreuz (also Anzielmarkierung), d.h. also eines Unterschieds zwischen den Ergebnissen aus den Anzielungen und Messungen jeweils unter Nutzung einerseits der physischen Anzielmarkierung und andererseits der künstlichen Markierung für die Anziel-Bildposition.

### "Accuracy achieved?":

Gewünschte Genauigkeit erreicht/gegeben? (d.h. Schritt des Überprüfens, ob die anhand der künstlichen Markierung indizierte Richtung hinreichend genau mit jener Richtung, die durch die physische Anzielmarkierung indiziert wird, übereinstimmt).

### "Transform in pixel and correct digital cosshair position":

Transformieren des berechneten Unterschieds in Pixel (also einen Pixelversatz) und entsprechendes Korrigieren der Position des elektronischen Fadenkreuzes.

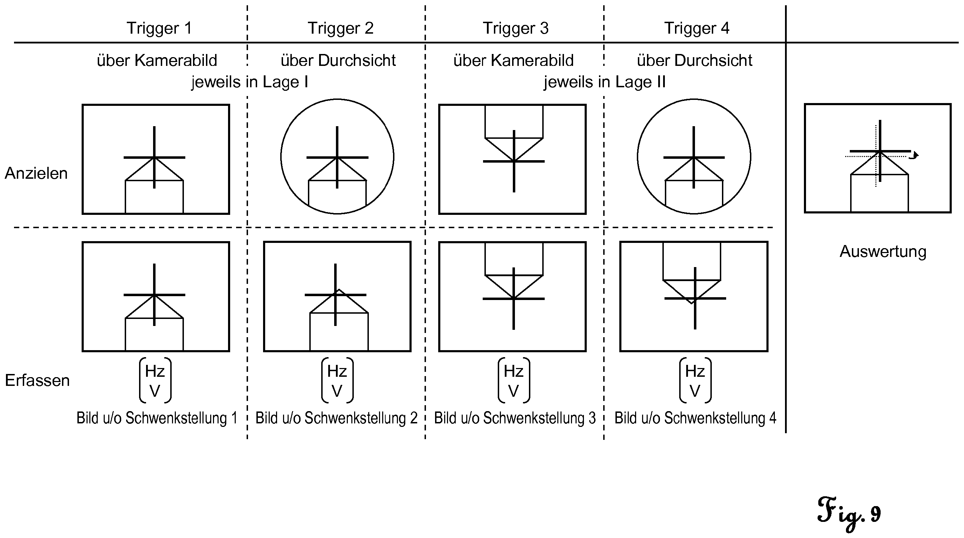

Wie dies in Figur 9 ersichtlich ist, kann das Kamera-Bild mit überlagertem elektronischem Fadenkreuz, welches zum Anzielen des Ziels in der umgeschlagenen zweiten Lage (also in umgeschlagenem Zustand der Anzieleinheit, d.h. in Face II) auf dem Display angezeigt wird, zur Erhöhung des Bedienkomforts für den Benutzer auch automatisch softwareseitig geflippt auf dem Display dargestellt sein.

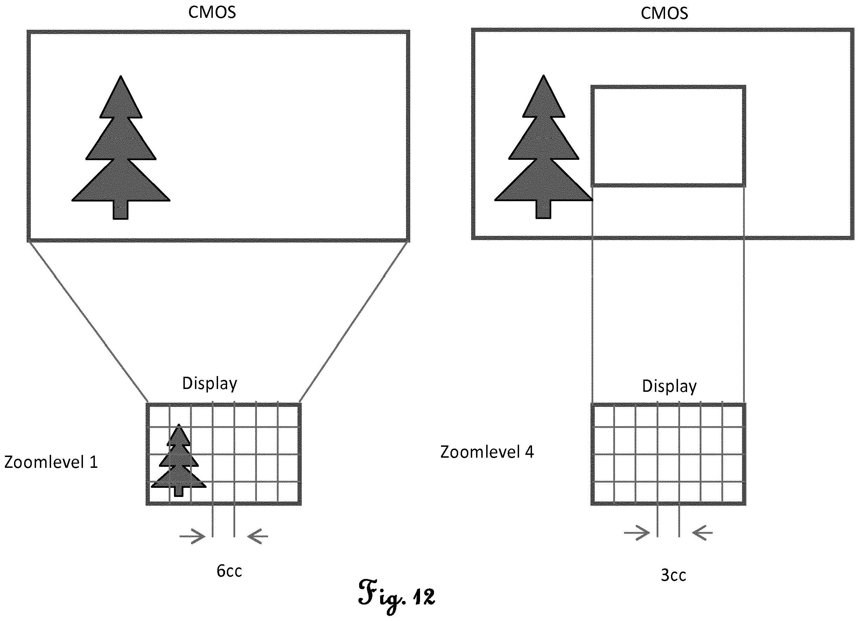

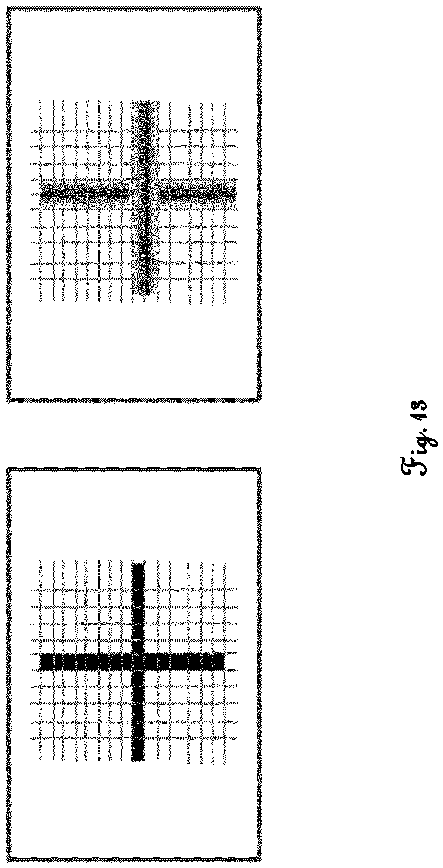

In Figur 12 ist eine Möglichkeit zum digitalen Zoomen im auf dem Display dargestellten Bild veranschaulicht und Figur 13 veranschaulicht das Anzeigen der Markierung für die Anziel-Bildposition derart in einer Grau- und/oder Farbstufendarstellung, dass dadurch benutzeraugenscheinlich die Bild-Position mit Sub-Displaypixelauflösung indiziert wird.

Es versteht sich, dass diese dargestellten Figuren nur mögliche Ausführungsbeispiele schematisch darstellen. Die verschiedenen Ansätze können ebenso miteinander sowie mit Verfahren des Stands der Technik kombiniert werden.

## Patentansprüche

1. Vermessungsgerät, insbesondere Video-Theodolit oder Video-Tachymeter, mit
• einer Basis,
• einer relativ zur Basis um eine erste Achse schwenkbaren Stütze,
• einer relativ zur Stütze um eine zweite Achse schwenkbaren Anzieleinheit mit einer einen optischen Strahlengang definierenden Teleskop-Optik mit
▪ einem Objektiv,
▪ einer eine Anzielrichtung definierenden physischen Anzielmarkierung, insbesondere einem Retikel,
▪ einem Okular und
▪ einer Kamera zur Aufnahme eines Bildes durch das Objektiv,
• Winkelmesser zur Messung von Schwenkstellungen von der Stütze und der Anzieleinheit,
• einer Auswerte- und Steuereinheit, die gespeicherte Kalibrierparameter bezüglich einer die Anzielrichtung indizierenden Bildposition im aufgenommenen Bild als Anziel-Bildposition enthält, und
• einem Display zur Anzeige eines aufgenommenen Bildes mit Markierung für die Anziel-Bildposition, insbesondere zur Anzeige des Bildes mit überlagertem elektronischem Fadenkreuz, dessen Fadenkreuzmittelpunkt auf die Anziel-Bildposition fällt,
**gekennzeichnet durch**
eine teilautomatische Funktion zur Überprüfung und/oder Re-Kalibrierung der Anziel-Bildposition,
wobei für die Funktion ein Ablauf definiert ist und dafür entsprechende Ablauf-Informationen in der Auswerte- und Steuereinheit hinterlegt sind, bei welchem Ablauf Anzielungen eines identischen Ziels sukzessiv mindestens einmal unter Verwendung der physischen Anzielmarkierung und mindestens einmal unter Verwendung der Markierung für die Anziel-Bildposition als Anzielhilfe erfolgen,
und wobei im Rahmen der Funktion automatisch gesteuert bzw. durchgeführt durch die Auswerte- und Steuereinheit
• auf einen ersten Auslöser hin, der bei erfolgter Anzielung des Ziels unter Verwendung der physischen Anzielmarkierung gebbar ist, automatisch erste Messdaten umfassend eine durch die Winkelmesser gemessene erste Schwenkstellung von der Stütze und der Anzieleinheit und/oder ein durch die Kamera aufgenommenes erstes Bild erfasst und einem Messdatensatz hinzugefügt werden,
• auf einen zweiten Auslöser hin, der bei erfolgter Anzielung des Ziels unter Verwendung der Markierung für die Anziel-Bildposition gebbar ist, automatisch zu den ersten Messdaten typ-konforme zweite Messdaten umfassend eine durch die Winkelmesser gemessene zweite Schwenkstellung von der Stütze und der Anzieleinheit und/bzw. ein durch die Kamera aufgenommenes zweites Bild erfasst und dem Messdatensatz hinzugefügt werden, und
• automatisch anhand von einer korrelierten Auswertung des Messdatensatzes die Anziel-Bildposition hinsichtlich Konkordanz mit der durch die physische Anzielmarkierung definierten Anzielrichtung überprüft und/oder durch Updaten der gespeicherten Kalibrierparameter re-kalibriert wird.

2. Vermessungsgerät nach Anspruch 1,
**dadurch gekennzeichnet, dass**
der Ablauf so definiert ist, dass mehrere Durchgänge von den Anzielungen durchgeführt werden, und
im Rahmen der Funktion automatisch gesteuert durch die Auswerte- und Steuereinheit jeweils
• auf einen weiteren Auslöser hin, der bei durch einen Benutzer erfolgter Anzielung des Ziels unter Verwendung der physischen Anzielmarkierung bzw. unter Verwendung der Markierung für die Anziel-Bildposition als Anzielhilfe gebbar ist, automatisch weitere Messdaten umfassend eine durch die Winkelmesser gemessene weitere Schwenkstellung von der Stütze und der Anzieleinheit und/oder ein durch die Kamera aufgenommenes weiteres Bild erfasst und dem Messdatensatz hinzugefügt werden.

3. Vermessungsgerät nach einem der vorangehenden Ansprüche,
**dadurch gekennzeichnet, dass**
der Ablauf so definiert ist, dass die Anzielungen in einem umgeschlagenen Zustand der Anzieleinheit wiederholt werden, und
im Rahmen der Funktion automatisch gesteuert durch die Auswerte- und Steuereinheit
• auf einen dritten Auslöser hin, der durch einen Benutzer bei im umgeschlagenen Zustand der Anzieleinheit erfolgter Anzielung des Ziels unter Verwendung der physischen Anzielmarkierung gebbar ist, automatisch dritte Messdaten umfassend eine durch die Winkelmesser gemessene dritte Schwenkstellung von der Stütze und der Anzieleinheit und/oder ein durch die Kamera aufgenommenes drittes Bild erfasst und dem Messdatensatz hinzugefügt werden,
• auf einen vierten Auslöser hin, der durch einen Benutzer bei im umgeschlagenen Zustand der Anzieleinheit erfolgter Anzielung des Ziels unter Verwendung der Markierung für die Anziel-Bildposition als Anzielhilfe gebbar ist, automatisch zu den dritten Messdaten typ-konforme vierte Messdaten umfassend eine durch die Winkelmesser gemessene vierte Schwenkstellung von der Stütze und der Anzieleinheit und/bzw. ein durch die Kamera aufgenommenes viertes Bild erfasst und dem Messdatensatz hinzugefügt werden.

4. Vermessungsgerät nach einem der vorangehenden Ansprüche, wobei die ersten und zweiten Messdaten zumindest eine erste und zweite Schwenkstellung umfassen,
**dadurch gekennzeichnet, dass**
im Rahmen der Funktion bei der korrelierten Auswertung des Messdatensatzes ein Unterschied zwischen der ersten und der zweiten Schwenkstellung - unter Anwendung von gespeicherten Parametern bzgl. der Kamerageometrie und deren optische Projektionseigenschaften - in einen Bildpositionsversatz übersetzt wird, um welcher die Anziel-Bildposition von einer neuen Soll-Anziel-Bildposition abweicht, und dieser Bildpositionsversatz ggf. auf die Anziel-Bildposition angewendet wird, sodass die gespeicherte Kalibrierparameter derart upgedatet werden, dass diese die neue Soll-Anziel-Bildposition als Anziel-Bildposition wiedergeben.

5. Vermessungsgerät nach einem der vorangehenden Ansprüche, wobei die ersten und zweiten Messdaten zumindest ein erstes und zweites Bild umfassen,
**dadurch gekennzeichnet, dass**
im Rahmen der Funktion bei der korrelierten Auswertung des Messdatensatzes anhand von Bilderkennung und unter Heranziehung des zweiten Bilds eine Identifikation des Ziels im ersten Bild erfolgt und eine Bildposition des identifizierten Ziels im ersten Bild als Ziel-Bildposition bestimmt wird und anhand eines Vergleichs von dieser Ziel-Bildposition mit der Anziel-Bildposition die Anziel-Bildposition überprüft und/oder durch Updaten der gespeicherten Kalibrierparameter re-kalibriert wird, insbesondere wobei die gespeicherte Kalibrierparameter derart upgedatet werden, dass diese neu die ermittelte Ziel-Bildposition als die Anziel-Bildposition wiedergeben.

6. Vermessungsgerät nach einem der vorangehenden Ansprüche, wobei der Messdatensatz redundante Messdaten enthält,
**dadurch gekennzeichnet, dass**
eine Redundanz hinsichtlich der Überprüfung und/oder Re-Kalibrierung im Rahmen der Funktion automatisch durch die Auswerte- und Steuereinheit genutzt wird für
• eine Mittelung, sodass die Genauigkeit für die Überprüfung und/oder Re-Kalibrierung steigerbar ist,
• eine Ermittlung eines Bestimmtheitsgrads oder Gütegrads der Überprüfung und/oder Re-Kalibrierung, und/oder
• eine konkomitierende Überprüfung und/oder Re-Kalibrierung von mindestens einem von folgenden weiteren Kalibrierparametern:
▪ einem Parameter bezüglich einem Richtungsfehler als Deviation der durch die physische Anzielmarkierung definierten Anzielrichtung von einer tatsächlichen Messachse [auch Kipp- und Stehachsenfehler genannt],
▪ einem Parameter bezüglich einem Fehler der Winkelmesser,
▪ einem Parameter bezüglich einer Kamerageometrie der Kamera,
▪ einem Parameter bezüglich einer Projektionseigenschaft der Kamera oder
▪ einem Parameter bezüglich eines Fehlers der optischen Achse der Kamera.

7. Vermessungsgerät nach einem der vorangehenden Ansprüche, wobei der Ablauf so definiert ist, dass mehrere Durchgänge von den Anzielungen durchgeführt werden,
**dadurch gekennzeichnet, dass**
im Rahmen der Funktion die durch die Auswerte- und Steuereinheit automatisch durchgeführte korrelierte Auswertung des Messdatensatzes nach Durchführung von einem definierten Durchgang der mehrere Durchgänge von den Anzielungen, insbesondere nach jedem der Durchgänge, als Zwischenauswertung durchgeführt wird und für die bis zur jeweiligen Zwischenauswertung angesammelten Messdaten ein Bestimmtheitsgrad und/oder Gütegrad hinsichtlich einer Neubestimmung der Anziel-Bildposition ermittelt wird, und wobei die Auswerte- und Steuereinheit anhand dieses Bestimmtheitsgrad eine Information ableitet, ob weitere Durchgänge von Anzielungen durchzuführen sind oder ob die Funktion zu beenden ist, insbesondere wobei diese Information als Handlungs-Empfehlung dem Benutzer vermittels vorgesehener Ausgabemittel, insbesondere durch das Display visuell, ausgegeben wird.

8. Vermessungsgerät nach einem der vorangehenden Ansprüche,
**dadurch gekennzeichnet, dass**
Ausgabemittel zur Ausgabe von Indikatoren vorhanden sind, insbesondere wobei das Display die Ausgabemittel darstellen zur visuellen Ausgabe, welche Ausgabemittel durch die Auswerte- und Steuereinheit im Rahmen der Funktion derart automatisch angesteuert werden, dass ein Benutzer anhand der ausgegebenen Indikatoren durch den Ablauf von Anzielungen geführt wird, insbesondere wobei
• ein Indikator angezeigt wird zur Aufforderung des Benutzers zur jeweiligen Durchführung einer der Anzielungen entweder unter Verwendung der physischen Anzielmarkierung oder unter Verwendung der Markierung für die Anziel-Bildposition als Anzielhilfe, insbesondere wobei zudem jeweils indiziert wird, ob die jeweilige Anzielung in umgeschlagenem Zustand der Anzieleinheit durchzuführen ist oder nicht,
• ein Indikator angezeigt wird als Angabe dafür, dass eine jeweilige automatische Erfassung von Messdaten auf einen jeweiligen Auslöser hin erfolgreich abgeschlossen ist,
• nach Abschluss einer jeweiligen automatischen Erfassung von Messdaten auf einen jeweiligen Auslöser hin ein Indikator angezeigt wird als Angabe dafür, dass und welche nächste Anzielung im Rahmen des definierten Ablaufs durchzuführen ist, und/oder
• nach Abschluss einer jeweiligen automatischen Erfassung von Messdaten auf einen jeweiligen Auslöser hin ein Indikator angezeigt wird als Angabe dafür, dass alle Anzielungen des Ablaufs abgeschlossen sind, insbesondere zudem mit ergänzender Angabe darüber, ob der anhand der erfolgten Anzielungen gesammelte Messdatensatz die Bild-Position hinlänglich profund überprüfbar macht bzw. die Bild-Position mit hinreichender Genauigkeit und Bestimmtheit updatebar macht.

9. Vermessungsgerät nach einem der vorangehenden Ansprüche,
**dadurch gekennzeichnet, dass**
• ein Temperatursensor vorgesehen ist,
• die gespeicherten Kalibrierparameter eine temperaturabhängige Funktion für die Anziel-Bildposition enthält, sodass die auf dem Display anzeigbare Markierung für die Anziel-Bildposition entsprechend einer aktuellen Temperatur setzbar ist, und
• im Rahmen der Funktion automatisch gesteuert durch die Auswerte- und Steuereinheit durch den Temperatursensor eine Temperatur erfasst wird und diese Temperatur für die Überprüfung bzw. Re-Kalibrierung berücksichtigt wird.

10. Vermessungsgerät nach einem der vorangehenden Ansprüche,
**dadurch gekennzeichnet, dass**
• durch die Kamera eine Kamerapixelauflösung definiert ist und das aufnehmbare Bild eine definierte Bildpixelauflösung aufweist, und
• im Rahmen der Funktion automatisch durch die Auswerte- und Steuereinheit die Anziel-Bildposition mit Sub-Bildpixelauflösung überprüft und/oder durch Updaten der gespeicherten Kalibrierparameter re-kalibriert wird.

11. Vermessungsgerät nach einem der vorangehenden Ansprüche,
**dadurch gekennzeichnet, dass**
• durch das Display eine Displaypixelauflösung definiert ist und
• die Markierung für die Anziel-Bildposition derart in einer Grau- und/oder Farbstufendarstellung angezeigt wird, dass dadurch benutzeraugenscheinlich die Bild-Position mit Sub-Displaypixelauflösung indiziert wird.

12. Vermessungsgerät nach einem der vorangehenden Ansprüche,
**dadurch gekennzeichnet, dass**
in die Anzieleinheit ferner ein koaxialer Laser-Entfernungsmesser integriert ist.

13. Vermessungsgerät nach einem der vorangehenden Ansprüche,
**dadurch gekennzeichnet, dass**
• das Vermessungsgerät eine mindestens die Basis, die Stütze, die Anzieleinheit und die Winkelmesser - sowie insbesondere auch die Auswerte- und Steuereinheit und das Display - umfassende Basisstation aufweist,
• insbesondere wobei das Vermessungsgerät neben der Basisstation auch eine datenmässig mit der Basisstation verbundene und körperlich unabhängige Peripherie-Fernsteuer-Einheit aufweist, wobei das Display und die Auswerte- und Steuereinheit entweder in der Peripherie-Fernsteuer-Einheit, oder in der Basisstation, oder - je nach Bedarf verwendbar - in der Peripherie-Fernsteuer-Einheit und der Basisstation vorgesehen sind.

14. Mit einem Vermessungsgerät durchzuführendes Verfahren zur Überprüfung und/oder Re-Kalibrierung einer Anziel-Bildposition, die durch Kalibrierparameter gegeben ist und für die eine Markierung als Anzielhilfe auf einem Display des Vermessungsgeräts zusammen mit einem durch eine Kamera des Vermessungsgeräts anzeigbarem Bild darstellbar ist, wobei die Anziel-Bildposition auf eine durch eine physische Anzielmarkierung des Vermessungsgeräts definierte Anzielrichtung Bezug nimmt,
und wobei das Vermessungsgerät ausgestattet ist mit
• einer Basis,
• einer relativ zur Basis um eine erste Achse schwenkbaren Stütze,
• einer relativ zur Stütze um eine zweite Achse schwenkbaren Anzieleinheit mit einer einen optischen Strahlengang definierenden Teleskop-Optik mit
▪ einem Objektiv,
▪ der die Anzielrichtung definierenden physischen Anzielmarkierung, insbesondere einem Retikel,
▪ einem Okular und
▪ der Kamera zur Aufnahme eines Bildes durch das Objektiv,
• Winkelmesser zur Messung von Schwenkstellungen von der Stütze und der Anzieleinheit,
• einer Auswerte- und Steuereinheit, die gespeicherte Kalibrierparameter bezüglich einer die Anzielrichtung indizierenden Bildposition im aufgenommenen Bild als Anziel-Bildposition enthält, und
• dem Display zur Anzeige eines aufgenommenen Bildes zusammen mit der Markierung, insbesondere zur Anzeige des Bildes mit überlagertem elektronischem Fadenkreuz, dessen Fadenkreuzmittelpunkt auf die Anziel-Bildposition fällt,
**gekennzeichnet durch**
einen Ablauf, zu welchem entsprechende Ablauf-Informationen in der Auswerte- und Steuereinheit hinterlegt sind, von mindestens einem Durchgang von
• einem Anzielen eines Ziels unter Verwendung der physischen Anzielmarkierung,
• einem Erfassen von ersten Messdaten umfassend eine durch die Winkelmesser gemessene erste Schwenkstellung von der Stütze und der Anzieleinheit und/oder ein durch die Kamera aufgenommenes erstes Bild und einem Hinzufügen dieser ersten Messdaten zu einem Messdatensatz,
• einem Anzielen des identischen Ziels unter Verwendung der Markierung für die Anziel-Bildposition als Anzielhilfe,
• einem Erfassen von zu den ersten Messdaten typ-konformen zweiten Messdaten umfassend eine durch die Winkelmesser gemessene zweite Schwenkstellung von der Stütze und der Anzieleinheit und/oder ein durch die Kamera aufgenommenes zweites Bild und einem Hinzufügen dieser zweiten Messdaten zum Messdatensatz,
sowie ferner ein automatisch seitens des Vermessungsgeräts erfolgendes korreliertes Auswerten des Messdatensatzes, wobei die Anziel-Bildposition hinsichtlich Konkordanz mit der durch die physische Anzielmarkierung definierten Anzielrichtung überprüft und/oder durch Updaten der Kalibrierparameter re-kalibriert wird.

15. Computerprogrammprodukt mit Programmcode, der auf einem maschinenlesbaren Träger gespeichert ist und gespeicherte Informationen enthält über
• eine Anziel-Bildposition, die durch Kalibrierparameter gegeben ist und für die eine Markierung als Anzielhilfe auf einem Display eines Vermessungsgeräts zusammen mit einem durch eine Kamera des Vermessungsgeräts anzeigbarem Bild darstellbar ist, wobei die Anziel-Bildposition auf eine durch eine physische Anzielmarkierung definierte Anzielrichtung des Vermessungsgeräts Bezug nimmt, sowie
• einen Ablauf von Anzielungen eines identischen Ziels sukzessiv mindestens einmal unter Verwendung der physischen Anzielmarkierung und mindestens einmal unter Verwendung der Markierung für die Anziel-Bildposition als Anzielhilfe,
zum - wenn das Programm auf der Steuer- und Auswerteeinheit des Vermessungsgeräts nach einem der Ansprüche 1 bis 13 ausgeführt wird - erfolgenden automatischen Steuern bzw. Durchführen der folgenden Schritte:
• auf einen ersten Auslöser hin, der bei erfolgter Anzielung des Ziels unter Verwendung der physischen Anzielmarkierung gebbar ist, erfolgendes Erfassen von ersten Messdaten umfassend eine über die Winkelmesser gemessene erste Schwenkstellung von der Stütze und der Anzieleinheit und/oder einem durch die Kamera aufgenommenen ersten Bild und Hinzufügen dieser ersten Messdaten zu einem Messdatensatz,
• auf einen zweiten Auslöser hin, der bei erfolgter Anzielung des Ziels unter Verwendung der Markierung für die Anziel-Bildposition als Anzielhilfe gebbar ist, erfolgendes Erfassen von zu den ersten Messdaten typ-konformen zweiten Messdaten umfassend eine durch die Winkelmesser gemessene zweite Schwenkstellung von der Stütze und der Anzieleinheit und/oder einem durch die Kamera aufgenommenen zweiten Bild und Hinzufügen dieser zweiten Messdaten zum Messdatensatz,
• Überprüfen und/oder durch Updaten der gespeicherten Kalibrierparameter erfolgendes Re-Kalibrieren der Anziel-Bildposition hinsichtlich Konkordanz mit der durch die physische Anzielmarkierung definierten Anzielrichtung anhand von einer korrelierten Auswertung des Messdatensatzes.

## Claims

1. A surveying device, in particular a video theodolite or video tachymeter, having
- a base,
- a support, which is pivotable in relation to the base about a first axis,
- a targeting unit, which is pivotable in relation to the support about a second axis, having telescope optics defining an optical beam path having
- an objective,
- a physical targeting marking defining a targeting direction, in particular a crosshair,
- an ocular, and
- a camera for recording an image through the objective,
- goniometers for measuring pivot positions of the support and the targeting unit,
- an analysis and control unit, which contains stored calibration parameters with respect to an image position indicating the targeting direction in the recorded image as the targeting image position, and
- a display screen for displaying a recorded image with marking for the targeting image position, in particular for displaying the image with superimposed electronic crosshair, the crosshair center point of which falls on the targeting image position,
**characterized by** a partially automatic function for checking and/or recalibrating the targeting image position,
wherein a sequence is defined for the function and corresponding items of sequence information are stored for this purpose in the analysis and control unit, during which sequence targeting actions of an identical target are successively performed at least once using the physical targeting marking and at least once using the marking for the targeting image position as a targeting aid,
and wherein in the scope of the function, in a manner automatically controlled or carried out by the analysis and control unit
- in response to a first trigger, which can be given in the event of completed targeting of the target using the physical targeting marking, first measurement data comprising a first pivot position of the support and the targeting unit, which is measured via the goniometers, and/or a first image recorded by the camera, are captured and added to a measurement data set,
- in response to a second trigger, which can be given in the event of completed targeting of the target using the marking for the targeting image position as a targeting aid, second measurement data, which conform in type to the first measurement data, comprising a second pivot position of the support and the targeting unit, which is measured by the goniometers, and/or a second image recorded by the camera, are captured and added to the measurement data set,
- the targeting image position is automatically checked, on the basis of a correlated analysis of the measurement data set, with respect to correspondence with the targeting direction defined by the physical targeting marking, and/or recalibrated by updating the stored calibration parameters,

2. The surveying device as claimed in claim 1,
**characterized in that** the sequence is defined so that multiple passes of the targeting actions are carried out, and in each case in the scope of the function, in a manner automatically controlled by the analysis and control unit
- in response to a further trigger, which can be given in the event of targeting of the target, which is performed by a user, using the physical targeting marking or using the marking for the targeting image position as a targeting aid, further measurement data comprising a further pivot position of the support and the targeting unit, which is measured by the goniometers, and/or a further image recorded by the camera are automatically captured and added to the measurement data set.

3. The surveying device as claimed in any one of the preceding claims,
**characterized in that** the sequence is defined so that the targeting actions are repeated in a changed state of the targeting unit, and
in the scope of the function, in a manner automatically controlled by the analysis and control unit
- in response to a third trigger, which can be given by a user in the case of targeting of the target, which is performed in the changed state of the targeting unit, using the physical targeting marking, third measurement data comprising a third pivot position, which is measured by the goniometers, of the support and the targeting unit and/or a third image recorded by the camera are automatically captured and added to the measurement data set,
- in response to a fourth trigger, which can be given by a user in the case of targeting of the target, which is performed in the changed state of the targeting unit, using the marking for the targeting image position as a targeting aid, fourth measurement data, which conform in type to the third measurement data, comprising a fourth pivot position of the support and the targeting unit, which is measured by the goniometers, and/or a fourth image recorded by the camera are automatically captured and added to the measurement data set.

4. The surveying device as claimed in any one of the preceding claims, wherein the first and second measurement data comprise at least one first and one second pivot position,
**characterized in that** in the scope of the function, in the case of the correlated analysis of the measurement data set, a difference between the first and the second pivot positions is translated into an image position offset - with application of stored parameters with respect to the camera geometry and the optical projection properties thereof - by which the targeting image position deviates from a new setpoint targeting image position, and this image position offset is optionally applied to the targeting image position, so that the stored calibration parameters are updated such that they reflect the new setpoint targeting image position as the targeting image position.

5. The surveying device as claimed in any one of the preceding claims, wherein the first and second measurement data comprise at least one first and one second image,
**characterized in that** in the scope of the function, in the case of the correlated analysis of the measurement data set on the basis of image recognition and using the second image, an identification of the target in the first image is performed and an image position of the identified target in the first image is determined as the target image position and on the basis of a comparison of this target image position to the targeting image position, the targeting image position is checked and/or recalibrated by updating the stored calibration parameters, in particular wherein the stored calibration parameters are updated such that they newly reflect the ascertained target image position as the targeting image position.

6. The surveying device as claimed in any one of the preceding claims, wherein the measurement data set contains redundant measurement data,
**characterized in that** a redundancy with respect to the checking and/or recalibration in the scope of the function is automatically used by the analysis and control unit for
- averaging, so that the accuracy can be increased for the checking and/or recalibration,
- ascertaining a degree of determination or degree of quality of the checking and/or recalibration, and/or
- concurrent checking and/or recalibration of at least one of the following further calibration parameters:
- a parameter with respect to a direction error as a deviation of the targeting direction defined by the physical targeting marking from an actual measurement axis [also called tilting axis error and standing axis error],
- a parameter with respect to an error of the goniometers,
- a parameter with respect to a camera geometry of the camera,
- a parameter with respect to a projection property of the camera, or
- a parameter with respect to an error of the optical axis of the camera.

7. The surveying device as claimed in any one of the preceding claims, wherein the sequence is defined so that multiple passes of the targeting actions are carried out,
**characterized in that** in the scope of the function, the correlated analysis of the measurement data set, which is carried out automatically by the analysis and control unit, is carried out as an intermediate analysis after carrying out one defined pass of the multiple passes of the targeting actions, in particular after each of the passes, and a degree of determination and/or a degree of quality with respect to a redetermination of the targeting image position is ascertained for the measurement data collected up to the respective intermediate analysis, and wherein the analysis and control unit derives an item of information on the basis of this degree of determination as to whether further passes of targeting actions are to be carried out or whether the function is to be ended, in particular wherein this item of information is output as an action recommendation to the user by means of provided output means, in particular visually by way of the display screen.

8. The surveying device as claimed in any one of the preceding claims,
**characterized in that** output means for outputting indicators are provided, in particular wherein the display screen displays the output means for the visual output, these output means being automatically activated by the analysis and control unit in the scope of the function such that a user is guided on the basis of the output indicators through the sequence of targeting actions, in particular wherein
- an indicator is displayed to prompt the user to respectively carry out one of the targeting actions either using the physical targeting marking or using the marking for the targeting image position as a targeting aid, in particular wherein it is additionally indicated in each case whether the respective targeting action is to be carried out in the changed state of the targeting unit or not,
- an indicator is displayed as a statement that a respective automatic capture of measurement data in response to a respective trigger has been successfully completed,
- after completion of a respective automatic capture of measurement data in response to a respective trigger, an indicator is displayed as a statement, that and which next targeting action is to be carried out in the scope of the defined sequence, and/or
- after completion of a respective automatic capture of measurement data in response to a respective trigger, an indicator is displayed as a statement that all targeting actions of the sequence are completed, in particular additionally with a supplementary statement as to whether the measurement data set collected on the basis of the performed targeting actions makes the image position able to be sufficiently profoundly checked or makes the image position able to be updated with sufficient accuracy and determination.

9. The surveying device as claimed in any one of the preceding claims,
**characterized in that**
- a temperature sensor is provided,
- the stored calibration parameters contain a temperature-dependent function for the targeting image position, so that the marking which can be displayed on the display screen for the targeting image position can be set in accordance with a current temperature, and
- in the scope of the function, in a manner automatically controlled by the analysis and control unit, a temperature is captured by the temperature sensor and this temperature is taken into consideration for the checking or recalibration.

10. The surveying device as claimed in any one of the preceding claims,
**characterized in that**
- a camera pixel resolution is defined by the camera and the image which can be recorded has a defined image pixel resolution, and
- in the scope of the function, in a manner automatically controlled by the analysis and control unit, the targeting image position is checked with sub-pixel resolution and/or recalibrated by updating the stored calibration parameters.

11. The surveying device as claimed in any one of the preceding claims,
**characterized in that**
- a display pixel resolution is defined by the display screen and
- the marking for the targeting image position is displayed in a grayscale and/or color level representation such that the image position is indicated with sub-display pixel resolution as seen by the user.

12. The surveying device as claimed in any one of the preceding claims,
**characterized in that** furthermore a coaxial laser distance meter is integrated in the targeting unit.

13. The surveying device as claimed in any one of the preceding claims,
**characterized in that**
- the surveying device comprises a base station, which comprises at least the base, the support, the targeting unit, and the goniometers - and also in particular the analysis and control unit and the display screen,
- in particular wherein the surveying device also comprises, in addition to the base station, a physically independent peripheral remote control unit, which has a data connection to the base station, wherein the display screen and the analysis and control unit are provided either in the peripheral remote control unit or in the base station or - usable as needed - in the peripheral remote control unit and the base station.

14. A method to be carried out using a surveying device for checking and/or recalibrating a targeting image position, which is given by calibration parameters and for which a marking can be displayed as a targeting aid on a display screen of the surveying device together with an image which can be displayed by a camera of the surveying device, wherein the targeting image position makes reference to a targeting direction defined by a physical targeting marking of the surveying device,
and wherein the surveying device is equipped with
- a base,
- a support, which is pivotable in relation to the base about a first axis,
- a targeting unit, which is pivotable in relation to the support about a second axis, having telescope optics defining an optical beam path having
- an objective,
- a physical targeting marking defining a targeting direction, in particular a reticle,
- an ocular, and
- a camera for recording an image through the objective,
- goniometers for measuring pivot positions of the support and the targeting unit,
- an analysis and control unit, which contains stored calibration parameters with respect to an image position indicating the targeting direction in the recorded image as the targeting image position, and
- the display screen for displaying a recorded image together with the marking, in particular for displaying the image with superimposed electronic crosshair, the crosshair center point of which falls on the targeting image position,
**characterized by** a sequence, to which corresponding items of sequence information are stored in the analysis and control unit, of at least one pass of
- targeting a target using the physical targeting marking,
- capturing first measurement data comprising a first pivot position of the support and the targeting unit, which is measured by the goniometers, and/or a first image recorded by the camera and adding these first measurement data to a measurement data set,
- targeting the identical target using the marking for the targeting image position as a targeting aid,
- capturing second measurement data, which conform in type to the first measurement data, comprising a second pivot position of the support and the targeting unit, which is measured by the goniometers, and/or a second image recorded by the camera and adding the second measurement data to the measurement data set,
and furthermore correlated analysis of the measurement data set, which is performed automatically on the part of the surveying device, wherein the targeting image position is checked with respect to correspondence to the targeting direction defined by the physical targeting marking and/or recalibrated by updating the calibration parameters.

15. A computer program product having program code, which is stored on a machine-readable carrier and contains stored items of information about
- a targeting image position, which is given by calibration parameters and for which a marking can be displayed as a targeting aid on a display screen of a surveying device together with an image which can be displayed by a camera of the surveying device, wherein the targeting image position makes reference to a targeting direction of the surveying device defined by a physical targeting marking, and
- a sequence of targeting actions of an identical target successively at least once using the physical targeting marking and at least once using the marking for the targeting image position as a targeting aid,
for - when the program is executed on the control and analysis unit of the surveying device as claimed in any one of claims 1 to 13 - automatically controlling or carrying out the following steps:
- in response to a first trigger, which can be given in the event of completed targeting of the target using the physical targeting marking, capturing first measurement data comprising a first pivot position of the support and the targeting unit, which is measured via the goniometers, and/or a first image recorded by the camera and adding of these first measurement data to a measurement data set
- in response to a second trigger, which can be given in the event of completed targeting of the target using the marking for the targeting image position as a targeting aid, capturing second measurement data, which conform in type to the first measurement data, comprising a second pivot position of the support and the targeting unit, which is measured by the goniometers, and/or a second image recorded by the camera and adding the second measurement data to the measurement data set,
- checking and/or recalibrating, which is performed by updating the stored calibration parameters, of the targeting image position with respect to correspondence with the targeting direction defined by the physical targeting marking on the basis of a correlated analysis of the measurement data set.

## Revendications

1. Appareil de mesure (1), en particulier théodolite vidéo ou tachymètre vidéo, avec
• une base,
• un appui pivotant par rapport à la base autour d'un premier axe,
• une unité de visée pivotante par rapport à l'appui autour d'un second axe avec une optique de télescope qui définit une marche optique des rayons avec
□ un objectif,
□ un marquage physique de visée qui définit une direction de visée, en particulier un réticule,
□ un oculaire et
□ une caméra pour la prise d'une image par l'objectif,
• des goniomètres pour la mesure de positions de pivotement de l'appui et de l'unité de visée,
• une unité d'analyse et de commande qui met à disposition les paramètres de calibrage mémorisés par rapport à une position d'image qui indique la direction de visée dans l'image prise comme position d'image de visée et
• un affichage pour afficher une image prise avec un marquage pour la position d'image de visée, en particulier pour l'affichage de l'image avec réticule électronique superposé dont le centre de réticule tombe sur la position d'image de visée,
**caractérisé par**
une fonction partiellement automatique pour la vérification et/ou le recalibrage de la position d'image de visée,
cependant qu'un déroulement est défini pour la fonction et que des informations de déroulement afférentes sont déposées dans l'unité d'analyse et de commande, déroulement pour lequel des visées d'une cible identique ont lieu de manière successive au moins une fois en utilisant le marquage physique de visée et au moins une fois en utilisant le marquage pour la position d'image de visée comme guide de visée
et cependant que les opérations suivantes sont commandées et/ou exécutées automatiquement par l'unité d'analyse et de commande dans le cadre de la fonction :
• en réponse à un premier déclencheur qui peut être donné une fois que la visée de la cible a eu lieu en utilisant le marquage physique de visée, saisie automatique de premières données de mesure comprenant une première position de pivotement de l'appui et de l'unité de visée mesurée par les goniomètres et/ou d'une première image prise par la caméra et ajout à un jeu de données de mesure,
• en réponse à un second déclencheur qui peut être donné une fois que la visée de la cible a eu lieu en utilisant le marquage pour la position d'image de visée, saisie automatique de secondes données de mesure de type conforme aux premières données de mesure comprenant une seconde position de pivotement de l'appui et de l'unité de visée mesurée par les goniomètres et/ou d'une seconde image prise par la caméra et ajout au jeu de données de mesure et
• vérification automatique de la position d'image de visée à l'aide d'une analyse corrélée du jeu de données de mesure pour ce qui est de la concordance avec la direction de visée définie par le marquage physique de visée et/ou recalibrage par mise à jour des paramètres de calibrage mémorisés.

2. Appareil de mesure selon la revendication 1, **caractérisé en ce que** le déroulement est défini de manière telle que plusieurs passages des visées sont effectués et que l'opération suivante est commandée automatiquement par l'unité d'analyse et de commande dans le cadre de la fonction :
• en réponse à un autre déclencheur qui peut être donné lors d'un ciblage de la cible effectué par un utilisateur en utilisant le marquage physique de visée et/ou en utilisant le marquage pour la position d'image de visée comme guide de visée, saisie automatique d'autres données de mesure comprenant une autre position de pivotement de l'appui et de l'unité de visée mesurée par les goniomètres et/ou d'une autre image prise par la caméra et ajout au jeu de données de mesure.

3. Appareil de mesure selon l'une des caractéristiques précédentes, **caractérisé en ce que** le déroulement est défini de telle manière que les visées sont répétées, l'unité de visée étant dans un état rabattu et
cependant que les opérations suivantes sont commandées automatiquement par l'unité d'analyse et de commande dans le cadre de la fonction :
• en réponse à un troisième déclencheur qui peut être donné lors d'un ciblage de la cible effectué par un utilisateur, l'unité de visée étant dans un état rabattu, en utilisant le marquage physique de visée, saisie automatique de troisièmes données de mesure comprenant une troisième position de pivotement de l'appui et de l'unité de visée et/ou d'une troisième image prise par la caméra et ajout au jeu de données de mesure,
• en réponse à un quatrième déclencheur qui peut être donné lors d'un ciblage de la cible effectué par un utilisateur, l'unité de visée étant dans un état rabattu, en utilisant le marquage pour la position d'image de visée comme guide de visée, saisie automatique de quatrièmes données de mesure de type conforme aux troisièmes données de mesure comprenant une quatrième position de pivotement de l'appui et de l'unité de visée mesurée par les goniomètres et/ou d'une quatrième image prise par la caméra et ajout au jeu de données de mesure.

4. Appareil de mesure selon l'une des caractéristiques précédentes, les premières et les secondes données de mesure comprenant au moins une première et une seconde position de pivotement,
**caractérisé en ce que**
dans le cadre de la fonction lors de l'analyse corrélée du jeu de données de mesure une différence entre la première et la seconde position de pivotement est convertie - en utilisant des paramètres mémorisés pour ce qui est de la géométrie de la caméra et de ses propriétés optiques de projection - en un décalage de position d'image dont la position d'image de visée diffère d'une nouvelle position de consigne d'image de visée et ce décalage de position d'image est appliqué, le cas échéant, à la position d'image de visée si bien que les paramètres de calibrage mémorisés sont actualisés de telle manière que ceux-ci reproduisent la nouvelle position de consigne d'image de visée comme position d'image de visée.

5. Appareil de mesure selon l'une des caractéristiques précédentes, les premières et les secondes données de mesure comprenant au moins une première et une seconde image,
**caractérisé en ce que**
dans le cadre de la fonction lors de l'analyse corrélée du jeu de données de mesure, à l'aide de la reconnaissance d'image et en ayant recours à la seconde image, une identification de la cible est effectuée dans la première image et une position d'image de la cible identifiée est déterminée dans la première image comme position d'image de cible et la position d'image de visée est vérifiée à l'aide d'une comparaison de cette position d'image de cible et de la position d'image de visée et/ou est recalibrée par actualisation des paramètres de calibrage mémorisés, en particulier, les paramètres de calibrage mémorisés étant actualisés de manière telle que ceux-ci reproduisent de manière nouvelle la position d'image de cible déterminée comme position d'image de visée.

6. Appareil de mesure selon l'une des caractéristiques précédentes, le jeu de données de mesure contenant des données de mesure redondantes, **caractérisé en ce qu'**une redondance est utilisée automatiquement par l'unité d'analyse et de commande pour ce qui est de la vérification et/ou du recalibrage dans le cadre de la fonction pour
• effectuer une moyenne si bien que l'exactitude pour la vérification et/ou le recalibrage peut être accrue,
• déterminer un degré de détermination ou un degré de qualité de la vérification et/ou du recalibrage
et/ou
• une vérification et/ou un recalibrage concomitant d'au moins l'un des autres - paramètres de calibrage suivants :
□ un paramètre concernant une erreur de direction comme déviation de la direction de visée définie par le marquage physique de visée d'un axe de mesure effectif (également désignée d'erreur d'axe de basculement et d'erreur d'axe vertical),
□ un paramètre concernant une erreur des goniomètres,
□ un paramètre concernant une géométrie de caméra de la caméra,
□ un paramètre concernant une propriété de projection de la caméra ou
□ un paramètre concernant une erreur de l'axe optique de la caméra.

7. Appareil de mesure selon l'une des caractéristiques précédentes, le déroulement étant défini de manière telle que plusieurs passages des visées sont effectués,
**caractérisé en ce que**,
dans le cadre de la fonction, l'analyse corrélée du jeu de données de mesure, exécutée automatiquement par l'unité d'analyse et de commande, est exécutée comme analyse intermédiaire après exécution d'un passage défini des plusieurs passages de visées, en particulier après chacun des passages, et qu'un degré de détermination et/ou un degré de qualité relatif à une nouvelle détermination de la position d'image de visée est déterminé pour les données de mesure collectées jusqu'à l'analyse intermédiaire respective et l'unité d'analyse et de commande dérivant, à l'aide de ce degré de détermination, une information si d'autres passages de visées doivent être exécutés ou si la fonction doit être terminée, en particulier cette information étant émise comme recommandation d'action pour l'utilisateur à l'aide de moyens de sortie prévus, en particulier de manière visuelle par l'affichage.

8. Appareil de mesure selon l'une des caractéristiques précédentes, **caractérisé en ce qu'**il existe des moyens de sortie pour émettre des indicateurs, en particulier l'affichage constituant les moyens de sortie pour un affichage visuel, lesquels moyens de sortie sont automatiquement commandés par l'unité d'analyse et de commande dans le cadre de la fonction de telle manière qu'un utilisateur est guidé à l'aide des indicateurs affichés par le déroulement de visées, en particulier
• cependant qu'un indicateur est affiché pour inviter l'utilisateur à exécuter respectivement l'une des visées soit en utilisant le marquage physique de visée, soit en utilisant le marquage pour la position d'image de visée comme guide de visée, en particulier cependant qu'il est indiqué respectivement en plus si la visée respective doit être exécutée, lorsque l'unité de visée est à l'état rabattu, ou non,
• qu'un indicateur est affiché comme indication qu'une saisie automatique respective de données de mesure en réponse à un déclencheur respectif est terminée avec succès,
• qu'après l'achèvement d'une saisie automatique respective de données de mesure après un déclencheur respectif un indicateur est affiché comme indication que et quelle visée suivante doit être exécutée dans le cadre du déroulement défini et/ou
• qu'après l'achèvement d'une saisie automatique respective de données de mesure en réponse à un déclencheur respectif un indicateur est affiché comme indication que toutes les visées du déroulement sont achevées, en particulier en plus avec l'indication complémentaire que le jeu de données de mesure collecté à l'aide des visées réalisées rend la position d'image vérifiable de manière suffisamment profonde ou rend la position d'image actualisable avec une exactitude et une précision suffisante.

9. Appareil de mesure selon l'une des caractéristiques précédentes, **caractérisé en ce**
• **qu'**il est prévu un capteur de température,
• **que** les paramètres de calibrage mémorisés contiennent une fonction dépendant de la température pour la position d'image de visée si bien que le marquage qui peut être affiché sur l'affichage peut être fixé pour la position d'image de visée selon une température actuelle et
• **qu'**une température est saisie par le capteur de température dans le cadre de la fonction en étant commandée automatiquement par l'unité d'analyse et de commande et qu'il est tenu compte de cette température pour la vérification et/ou le recalibrage.

10. Appareil de mesure selon l'une des caractéristiques précédentes, **caractérisé en ce**
• **qu'**une résolution de pixels de caméra est définie par la caméra et l'image qui peut être prise présente une résolution de pixels d'image définie et
• **que** la position d'image de visée est vérifiée automatiquement dans le cadre de la fonction avec une résolution de subpixels d'image par l'unité d'analyse et de commande et/ou est recalibrée par actualisation des paramètres de calibrage mémorisés.

11. Appareil de mesure selon l'une des caractéristiques précédentes, **caractérisé en ce**
• **qu'**une résolution de pixels d'affichage est définie par l'affichage et
• **que** le marquage pour la position d'image de visée est affichée dans une représentation de niveaux de gris et/ou de couleurs de telle manière que la position d'image est indiquée de façon évidente pour l'utilisateur avec une résolution de subpixels d'affichage.

12. Appareil de mesure selon l'une des caractéristiques précédentes, **caractérisé en ce qu'**un télémètre laser coaxial est intégré à l'unité de ciblage.

13. Appareil de mesure selon l'une des caractéristiques précédentes, **caractérisé en ce**
• **que** l'appareil de mesure présente une station de base qui comprend au moins la base, le support, l'unité de visée et les goniomètres - ainsi qu'en particulier également l'unité d'analyse et de commande et l'affichage,
• **qu'**en particulier, cependant que l'appareil de mesure présente, en plus de la station de base, également une unité de télécommande périphérique reliée du point de vue informatique à la station de base et indépendante physiquement, cependant que l'affichage et l'unité d'analyse et de commande sont prévus soit dans l'unité de télécommande périphérique, soit dans la station de base, soit dans l'unité de télécommande périphérique et la station de base - utilisable au besoin.

14. Procédé de vérification et/ou de recalibrage d'une position d'image de visée à exécuter avec un appareil de mesure, position d'image de visée qui est donnée par des paramètres de calibrage et pour lesquels un marquage peut être représenté comme guide de visée sur un affichage de l'appareil de mesure conjointement avec une image qui peut être affichée par une caméra de l'appareil de mesure, la position d'image de visée faisant référence à une direction de visée définie par un marquage de visée physique de l'appareil de mesure
et cependant que l'appareil de mesure est équipé
• d'une base,
• d'un appui pivotant par rapport à la base autour d'un premier axe,
• d'une unité de visée pivotante par rapport à l'appui autour d'un second axe avec une optique de télescope qui définit une marche optique des rayons avec
□ un objectif,
□ le marquage physique de visée qui définit la direction de visée, en particulier un réticule,
□ un oculaire et
□ la caméra pour la prise d'une image par l'objectif,
• des goniomètres pour la mesure de positions de pivotement de l'appui et de l'unité de visée,
• une unité d'analyse et de commande qui met à disposition les paramètres de calibrage mémorisés par rapport à une position d'image qui indique la direction de visée dans l'image prise comme position d'image de visée et
• l'affichage pour afficher une image prise conjointement avec le marquage, en particulier pour l'affichage de l'image avec réticule électronique superposé dont le centre de réticule tombe sur la position d'image de visée,
**caractérisé par**
un déroulement pour lequel des informations de déroulement afférentes sont enregistrées dans l'unité d'analyse et de commande, dont au moins un passage
• d'une visée d'une cible en utilisant le marquage physique de visée,
• une saisie de premières données de mesure qui comprennent une première position de pivotement de l'appui et de l'unité de visée mesurée par les goniomètres et/ou d'une première image prise par la caméra et ajout de ces premières données de mesure à un jeu de données de mesure,
• une visée de la cible identique en utilisant le marquage pour la position d'image de visée comme guide de visée
• une saisie de secondes données de mesure de type conforme aux premières données de mesure comprenant une seconde position de pivotement de l'appui et de l'unité de visée mesurée par les goniomètres et/ou d'une seconde image prise par la caméra et ajout de ces secondes données de mesure au jeu de données de mesure
ainsi que de plus une analyse corrélée du jeu de données de mesure qui se fait automatiquement par l'appareil de mesure, la position d'image de visée étant vérifiée pour ce qui est de la concordance avec la direction de visée définie par le marquage physique de visée et/ou recalibrée par mise à jour des paramètres de calibrage.

15. Produit programme d'ordinateur avec code de programme qui est mémorisé sur un support lisible par machine et qui contient des informations mémorisées sur
• une position d'image de visée qui est donnée par des paramètres de calibrage et pour lesquels un marquage peut être représenté comme guide de visée sur un affichage d'un appareil de mesure conjointement avec une image qui peut être affichée par une caméra de l'appareil de mesure, la position d'image de visée faisant référence à une direction de visée définie par un marquage de visée physique de l'appareil de mesure ainsi
• qu'un déroulement de visées d'une cible identique de manière successive au moins une fois en utilisant le marquage physique de visée et au moins une fois en utilisant le marquage pour la position d'image de visée comme guide de visée
pour la commande et/ou l'exécution automatique des étapes suivantes lorsque le programme est réalisé sur l'unité de commande et d'analyse de l'appareil de mesure selon l'une des revendications 1 à 13 :
• en réponse à un premier déclencheur qui peut être donné une fois que la visée de la cible a eu lieu en utilisant le marquage physique de visée, saisie de premières données de mesure comprenant une première position de pivotement de l'appui et de l'unité de visée mesurée par les goniomètres et/ou d'une première image prise par la caméra et ajout de ces premières données de mesure à un jeu de données de mesure,
• en réponse à un second déclencheur qui peut être donné une fois que la visée de la cible a eu lieu en utilisant le marquage pour la position d'image de visée comme guide de visée, saisie de secondes données de mesure de type conforme aux premières données de mesure comprenant une seconde position de pivotement de l'appui et de l'unité de visée mesurée par les goniomètres et/ou d'une seconde image prise par la caméra et ajout de ces secondes données de mesure au jeu de données de mesure et
• vérification et/ou recalibrage de la position d'image de visée par mise à jour des paramètres de calibrage mémorisés pour ce qui est de la concordance avec la direction de visée définie par le marquage physique de visée à l'aide d'une analyse corrélée du jeu de données de mesure.
